(19) Europäisches Patentamt
European Patent Office
Office européen des brevets

(11) EP 1 397 881 B1

## (12) EUROPÄISCHE PATENTSCHRIFT

(45) Veröffentlichungstag und Bekanntmachung des Hinweises auf die Patenterteilung:
**08.04.2009 Patentblatt 2009/15**

(51) Int Cl.:
***H04L 1/18*** (2006.01)

(21) Anmeldenummer: **01274323.3**

(22) Anmeldetag: **17.10.2001**

(86) Internationale Anmeldenummer:
**PCT/DE2001/003964**

(87) Internationale Veröffentlichungsnummer:
**WO 2003/001730 (03.01.2003 Gazette 2003/01)**

(54) **VERFAHREN UND VORRICHTUNG ZUR DATENÜBERTRAGUNG GEMÄSS EINEM ARQ-VERFAHREN**

METHOD AND DEVICE FOR TRANSFERRING DATA ACCORDING TO AN ARQ-METHOD

PROCEDE ET DISPOSITIF POUR LA TRANSMISSION DE DONNEES SELON UN PROCEDE ARQ

(84) Benannte Vertragsstaaten:
**DE FR GB IT**

(30) Priorität: **20.06.2001 DE 10129777**

(43) Veröffentlichungstag der Anmeldung:
**17.03.2004 Patentblatt 2004/12**

(73) Patentinhaber: **SIEMENS AKTIENGESELLSCHAFT**
**80333 München (DE)**

(72) Erfinder:
- **MICHEL, Jürgen**
  **81737 München (DE)**
- **RAAF, Bernhard**
  **81475 München (DE)**
- **DÖTTLING, Martin**
  **85579 Neubiberg (DE)**

(56) Entgegenhaltungen:
**EP-A- 0 771 092**

- **3GPP TS 25 322 VERSION 4 0 0 RELEASE 4: "Universal Mobile Telecommunications System (UMTS);RLC protocol specification" ETSI TS 125.322 V4.0.0, XX, XX, März 2001 (2001-03), Seiten 1-57, XP002180710**
- **NARAYANAN K R ET AL: "Physical layer design for packet data over IS-136" VEHICULAR TECHNOLOGY CONFERENCE, 1997, IEEE 47TH PHOENIX, AZ, USA 4-7 MAY 1997, NEW YORK, NY, USA,IEEE, US, 4. Mai 1997 (1997-05-04), Seiten 1029-1033, XP010228999 ISBN: 0-7803-3659-3**
- **"ETSI TS 125 222 Universal Mobile Telecommunications System (UMTS); Multiplexing and channel coding (TDD)" ETSI TS 125 222 V4.0.0, 16. März 2001 (2001-03-16), XP002190463**
- **"ETSI TS 125 223 Universal Mobile Telecommunications System (UMTS); Spreading and modulation (TDD)" ETSI TS 125 223 V4.0.0, 16. März 2001 (2001-03-16), XP002190464**
- **JOURNAL ARTICLE: 'Universal Mobile Telecommunications system (UMTS); Radio Interface Protocol Architecture' ETSI TS 125 301 V4.0.0 01 März 2001, Seiten 1 - 41, XP002226053**
- **"Universal Mobile Telecommunications System (UMTS); Physical layer- General description" ETSI TS 125 201 V4.0.0, 16. März 2001 (2001-03-16),**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren sowie eine entsprechend ausgestaltete Vorrichtung zur Datenübertragung gemäß einem ARQ-Verfahren, insbesondere einem Hybrid-ARQ-Verfahren, in einem Kommmunikationssystem, insbesondere einem Mobilfunksystem.

Insbesondere in Verbindung mit Mobilfunksystemen wird häufig die Verwendung sogenannter Paketzugriffsverfahren bzw. paketorientierter Datenverbindungen vorgeschlagen, da die aufkommenden Nachrichtentypen häufig einen sehr hohen Burstfaktor besitzen, so dass nur kurze Aktivitätsperioden existieren, die von langen Ruhepausen unterbrochen sind. Paketorientierte Datenverbindungen können in diesem Fall die Effizienz im Vergleich zu anderen Datenübertragungsverfahren, bei denen ein kontinuierlicher Datenstrom vorhanden ist, erheblich steigern, da bei Datenübertragungsverfahren mit einem kontinuierlichen Datenstrom eine einmal zugeteilte Ressource, wie z.B. eine Trägerfrequenz oder ein Zeitschlitz, während der gesamten Kommmunikationsbeziehung zugeteilt bleibt, d.h. eine Ressource bleibt auch dann belegt, wenn momentan keine Datenübertragungen anliegen, so dass diese Ressource für andere Netzteilnehmer nicht zur Verfügung steht. Dies führt zu einer nicht optimalen Nutzung des knappen Frequenzspektrums für Mobilfunksysteme.

Zukünftige Mobilfunksysteme, wie beispielsweise gemäß dem UMTS-Mobilfunkstandard ("Universal Mobile Telecommunications System"), werden eine Vielzahl unterschiedlicher Dienste anbieten, wobei neben der reinen Sprachübertragung Multimedia-Anwendungen zunehmend an Bedeutung gewinnen werden. Die damit einhergehende Dienstevielfalt mit unterschiedlicher Übertragungsraten erfordert ein sehr flexibles Zugriffsprotokoll auf der Luftschnittstelle zukünftiger Mobilfunksysteme. Paketorientierte Datenübertragungsverfahren haben sich hier als sehr geeignet erwiesen.

Im Zusammenhang mit UMTS-Mobilfunksystemen wurde bei paketorientierten Datenverbindungen ein sogenanntes ARQ-Verfahren ("Automatic Repeat Request") vorgeschlagen. Dabei werden die von einem Sender an einen Empfänger übertragenen Datenpakete empfängerseitig nach ihrer Decodierung hinsichtlich ihrer Qualität überprüft. Ist ein empfangenes Datenpaket fehlerhaft, fordert der Empfänger eine erneute Übertragung dieses Datenpakets von dem Sender an, d.h. es wird ein Wiederholungsdatenpaket von dem Sender an den Empfänger gesendet, welches mit dem zuvor gesendeten und fehlerhaft empfangenen Datenpaket identisch bzw. teilweise identisch ist (je nachdem, ob das Wiederholungsdatenpaket weniger oder gleich viele Daten wie das ursprüngliche Datenpaket enthält, wird von einer vollen oder einer partiellen Wiederholung gesprochen). Hinsichtlich dieses für den UMTS-Mobilfunkstandard vorgeschlagenen ARQ-Verfahrens, welches auch als Hybrid-ARQ-Typ 1-Verfahren bezeichnet wird, ist sowohl die Übertragung von Daten als auch von sogenannten Headerinformationen in einem Datenpaket vorgesehen, wobei die Headerinformationen auch Informationen zur Fehlerüberprüfung, wie beispielsweise CRC-Bits ("Cyclic Redundancy Check") aufweisen und auch zur Fehlerkorrektur codiert sein können (sogenannte "Forward Error Correction", FEC).

Gemäß dem derzeitigen Stand der UMTS-Standardisierung wird die Übertragung der Bits der einzelnen Datenpakete bzw. Wiederholungsdatenpakete nach Durchführung einer entsprechenden Kanalcodierung mittels QAM-Modulation ("Quadraturamplitudenmodulation") vorgeschlagen. Dabei werden die einzelnen Bits über ein als "Gray-Mapping" bezeichnetes Verfahren auf entsprechende QAM-Symbole abgebildet, welche einen zweidimensionalen Symbolraum bilden. Dabei ist problematisch, dass bei der vorgeschlagenen QAM-Modulation mit einem Alphabetumfang, welcher mehr als vier QAM-Symbole umfasst, die Zuverlässigkeit der zu übertragenden Bits zwischen den höherwertigen Bits und den niedrigerwertigen Bits erheblich variiert, wobei dies insbesondere hinsichtlich der durchzuführenden Kanalcodierung nachteilig ist, da hierzu bevorzugt Turbo-Coder eingesetzt werden, welche zur Erzielung einer ausreichend hohen Leistungsfähigkeit gleichmäßige Bitzuverlässigkeiten erfordern. Bei dem zuvor erläuterten Hybrid-ARQ-Typ I-Verfahren, bei welchem das Wiederholungsdatenpaket mit dem ursprünglichen Datenpaket identisch ist, führt die zuvor erläuterte Eigenschaft der Variation der Bitzuverlässigkeiten dazu, dass bestimmte Bits der Datenpakete und der Wiederholungsdatenpakete jeweils an der gleichen Stelle im QAM-Symbolraum zu finden sind, so dass hierdurch die Leistungsfähigkeit der gesamten Datenübertragung reduziert wird und sich eine frühzeitige Begrenzung des Datendurchsatzes ergibt.

Zur Lösung dieses Problems wurde bereits ein Verfahren vorgeschlagen, dass diejenigen Bits, welche an der gleichen Stelle in dem ursprünglichen Datenpaket und den Wiederholungsdatenpaketen auftreten, unterschiedlichen QAM-Symbolen im QAM-Symbolraum durch dynamische Umordnung des "Gray-Mapping" zugewiesen werden.

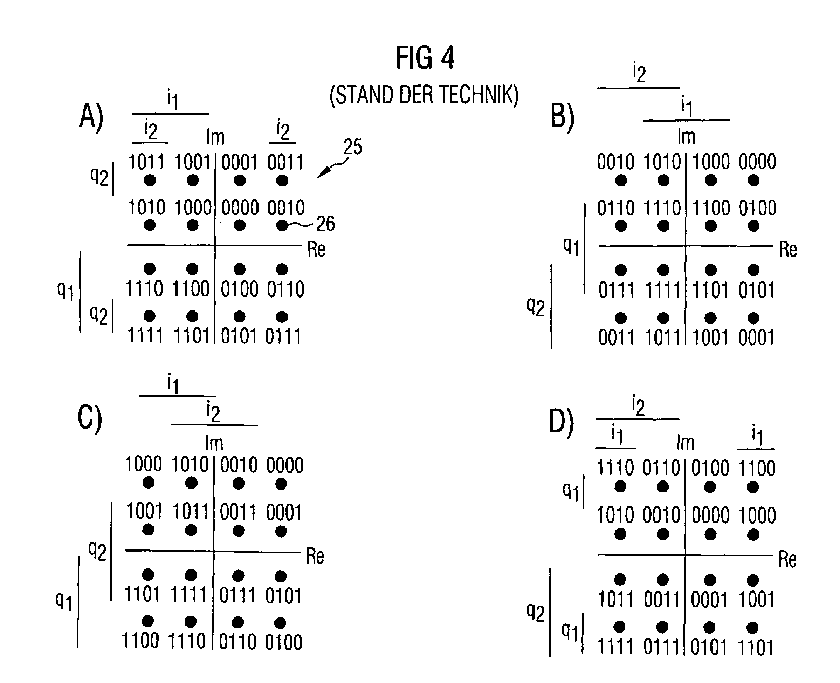

Dies soll nachfolgend näher unter Bezugnahme auf Figur 4A-4D erläutert werden. In Figur 4A ist die Signalkonstellation bzw. der QAM-Symbolraum für eine 16-QAM-Modulation dargestellt. Dabei werden jeweils Bits $i_1$ und $i_2$ sowie $q_1$ und $q_2$ auf ein entsprechendes QAM-Symbol 26 des zweidimensionalen QAM-Symbolraums 25 in der Reihenfolge $i_1 q_1 i_2 q_2$ abgebildet. Die für jedes Bit $i_1$, $i_2$, $q_1$, $q_2$ möglichen Spalten bzw. Zeilen von QAM-Symbolen 26 in dem zweidimensionalen QAM-Symbolraum 25 sind jeweils mit Hilfe entsprechender Striche markiert. So kann beispielsweise das Bit $i_1$ = "1" nur auf QAM-Symbole der ersten zwei Spalten des QAM-Symbolraums abgebildet werden. Aufgrund des "Gray-Mapping" ist die Zuverlässigkeit des höherwertigen Bits $i_1$ größer als die Zuverlässigkeit des niederwertigeren Bits $i_2$. Darüber hinaus schwankt die Bitzuverlässigkeit des Bits $i_2$ abhängig von dem jeweils übertragenen entsprechenden QAM-Symbol 26 (d.h. abhängig davon, ob das entsprechende QAM-Symbol 26 in der äußeren linken oder äußeren rechten Spalte des QAM-Symbolraums 25 angeordnet ist). Dasselbe gilt für die Bits $q_1$ und $q_2$, da die Abbildung der Bits $q_1$ und $q_2$ äquivalent zur Abbildung der Bits $i_1$ und $i_2$ (allerdings hierzu orthogonal) erfolgt.

Gemäß dem anhand der Figuren 4A-4D erläuterten herkömmlichen Verfahren wird vorgeschlagen, für Wiederholungsdatenpakete ein "Gray-Mapping" zu verwenden, welches sich von dem "Gray-Mapping" des ursprünglichen Datenpakets unterscheidet. D.h. für ein erstes Wiederholungsdatenpaket kann beispielsweise das in Figur 4B verdeutlichte "Gray-Mapping" verwendet werden, während für ein zweites Wiederholungsdatenpaket ein in Figur 4C gezeigtes "Gray-Mapping" und für ein drittes Wiederholungsdatenpaket ein in Figur 4D gezeigtes "Gray-Mapping" verwendet werden kann. Bei Vergleich der Darstellungen von Figur 4A-4D wird deutlich, dass ein und derselben Bitkombination $i_1$ $q_1$ $i_2$ $q_2$ jeweils unterschiedliche QAM-Symbole 26, d.h. unterschiedliche Punkte in dem zweidimensionalen QAM-Symbolraum 25, zugeordnet sind. Diese dynamische Variation des "Gray-Mapping" kann beispielsweise soweit gehen, dass nach einer bestimmten Anzahl von Wiederholungen jedes Bit $i_1$, $i_2$, $q_1$ und $q_2$ an einer Stelle im QAM-Symbolraum 25 mit sehr guter oder guter bzw. schlechter Zuverlässigkeit übertragen wird, wobei dieses Verfahren für eine unterschiedliche Anzahl von Wiederholungen optimiert werden kann.

Aus Figur 4A-4D ist ersichtlich, dass diese Vorgehensweise relativ aufwendig ist, da für jedes Wiederholungsdatenpaket das "Gray-Mapping" verändert werden muss.

In der europäischen Patentanmeldung EP 0 771 092 A1 wird ein Verfahren zur Übertragung von Datenpaketen mit Hybrid FEC/ARQ Typ 2 (Hybride [gemischte] Forward Error Correction ["Vorwärtsfehlerkorrektur"]/ Automatic Repeat ReQuest ["Automatische Wiederholungsanfrage"] des Types 2) beschrieben.

In dem Artikel "Physical Layer Design for Packet Data over IS-136", Vehicular Technology Conference, 1997, IEEE 47th Phoenix, AZ, USA, 4-7 May 1997, New York, NY; USA, IEEE, US (04-05-1997), Seiten 1029-1033, werden verschiedene FEC, Interleaving und ARQ-Verfahren für die Datenpacketübertragung über IS-136 TDMA Systeme (Zeitmultiplexsysteme) untersucht. Der Gegenstand der Arbeit ist eine Kombination von FEC, Interleaving und ARQ zu finden, die maximalen (Daten-) Durchsatz bei vernünftiger Rechenleistungskomplexität bietet.

Der vorliegenden Erfindung liegt daher die Aufgabe zugrunde, ein Verfahren sowie eine entsprechende ausgestaltete Vorrichtung zur Datenübertragung gemäß einem ARQ-Verfahren vorzuschlagen, bei dem das zuvor erläuterte Problem, d.h. die Erzielung einer möglichst zuverlässigen Datenübertragung mit einem hohen Datendurchsatz, auf möglichst einfache Art und Weise gelöst werden kann.

Diese Aufgabe wird erfindungsgemäß durch ein Verfahren mit den Merkmalen des Anspruches 1 bzw. eine Vorrichtung mit den Merkmalen des Anspruches 13 gelöst. Die Unteransprüche definieren jeweils bevorzugte und vorteilhafte Ausführungsformen der vorliegenden Erfindung.

Erfindungsgemäß wird vorgeschlagen, auf die einzelnen Bits des ursprünglichen Datenpakets sowie der einzelnen Wiederholungsdatenpakete unterschiedliche Ratenanpassungsmuster, d.h. unterschiedliche Punktierungs- oder Repetierungsmuster, anzuwenden, so dass die entsprechenden Bits bereits vor Durchführung der QAM-Modulation an unterschiedlichen Stellen in dem jeweiligen Paket zu liegen kommen und somit ohne Abwandlung des "Gray-Mapping" unterschiedlichen Punkten bzw. QAM-Symbolen in dem QAM-Symbolraum zugeordnet werden können. Auf diese Weise wird eine gleichmäßige Verteilung der Zuverlässigkeit der zu übertragenen Bits zwischen dem Datenpaket und den nachfolgenden Wiederholungsdatenpaketen erzielt, so dass eine leistungsfähige Kanalcodierung, beispielsweise unter Einsatz von Turbo-Codierern durchgeführt werden kann, so dass insgesamt eine ausreichend hohe Leistungsfähigkeit der Informations- bzw. Datenübertragung bei gleichzeitiger Realisierung eines hohen Datendurchsatzes gewährleistet ist.

Die vorliegende Erfindung kann beispielsweise unter Einsatz eines herkömmlichen Ratenanpassungsalgorithmus realisiert werden, wobei ein gemäß diesem Ratenanpassungsalgorithmus verwendeter Offsetwert, welcher wesentlich das jeweils verwendeten Ratenanpassungsmuster bestimmt, zwischen dem ursprünglichen Datenpaket und den einzelnen Wiederholungsdatenpaketen variiert wird. Durch die Variation dieses Offsetwerts kann eine leistungsfähigere Codierung als bei dem herkömmlichen Hybrid-ARQ-Typ I-Verfahren erzielt werden.

Bevorzugt kann hierzu der kanalcodierte Bitstrom auf mehrere parallele Teilbitströme aufgeteilt werden (sogenannte Bitseparation), wobei auf die einzelnen Teilbitströme jeweils voneinander unabhängige Ratenanpassungsmuster, d.h. eine voneinander unabhängige Punktierung oder Repetierung der Bits, angewendet wird, so dass nach abschließender Kombination der entsprechenden Bits dieser Teilbitströme (sogenannte Bitkollektion) die gewünschte Ratenanpassung mit dem unterschiedlichen Offsetwert bezüglich dem ursprünglichen Datenpaket und den einzelnen Wiederholungsdatenpaketen erzielt werden kann. Durch die Aufteilung des Bitstroms in mehrere parallele Teilbitströme kann eine besonders hohe Flexibilität bei der Kanalcodierung erzielt werden.

Da der jeweilige Empfänger der auf diese Art und Weise verarbeiteten Datenpakete bzw. Wiederholungsdatenpakete den jeweils verwendeten Offsetwert kennen muss und eine explizite Übertragung dieses Offsetwerts nachteilig sein kann, kann der Offsetwert beispielsweise synchron mit der jeweiligen Zeitschlitznummer ("Time Slot") und/oder synchron mit der jeweiligen Rahmennummer ("Frame") verändert werden, so dass der Empfänger aus dem jeweils empfangenen Zeitschlitz bzw. Rahmen unmittelbar auf den jeweils verwendeten Offsetwert schließen kann.

Bei der zuvor erläuterten Bitseparation mit Aufteilung der Bits auf mehrere parallele Teilbitströme können bei der abschließenden Bitkollektion die unterschiedlichen parallelen Teilbitströme pro Datenpaket bzw. Wiederholungsdatenpaket auch anteilig miteinander kombiniert werden, wobei dies besonders vorteilhaft bei Anwendung von Bitrepetierung einsetzbar ist. Der zuvor erläuterte Offsetwert kann für das ursprüngliche Datenpaket sowie die einzelnen Wiederholungsdatenpakete derart eingestellt werden, dass die Verschiebung der daraus resultierenden Ratenanpassungsmuster zueinander maximal ist und/oder möglichst viele der sich einander entsprechenden Bits des ursprünglichen Datenpakets bzw. des jeweiligen Wiederholungsdatenpakets bei der abschließenden Modulation auf unterschiedliche Punkte in dem zweidimensionalen Symbolraum abgebildet werden.

Das zuvor erläuterte Verfahren funktioniert optimal, wenn die Bits unmittelbar nach Durchführung der Ratenanpassung auf den jeweils gewünschten Modulations-Symbolraum abgebildet werden. Dies ist jedoch in der Regel nicht der Fall, da zwischen der Ratenanpassung und der Modulation häufig noch ein sogenanntes Interleaving stattfindet, durch welches die Bits zeitlich umgeordnet werden. Bei einem zufälligen Interleaver würden benachbarte Bits zufällig auf die entsprechenden Punkte bzw. Symbole des zweidimensionalen Symbolraums verteilt werden, so dass die Verschiebung um ein Bit, welche durch die zuvor erläuterte Variation des Offsetwerts erreicht werden kann, auch eine zufällige Veränderung der Punkte bzw. Symbole des zweidimensionalen Symbolraums ergeben würde. Dies wäre jedoch nicht optimal, da am besten die Zuordnung so geändert wird, dass ein bei der Übertragung des ursprünglichen Datenpakets wenig zuverlässiges Bit bei einem nachfolgend zu übertragenen Wiederholungsdatenpaket auf eine Position des Modulations-Symbolraums (z.B. des QAM-Symbolraums) mit höherer Zuverlässigkeit und umgekehrt abgebildet wird, während bei einer zufälligen Vertauschung lediglich ein Gewinn von ca. 50% des maximal möglichen Gewinns erzielt werden könnte.

Aus diesem Grund wird vorzugsweise für das Interleaving ein sehr regulärer Interleaver, beispielsweise ein Blockinterleaver, eingesetzt, wobei zudem die Anzahl der Spalten, auf welche der Interleaver die Bits mit anschließender Spaltenvertauschung bzw. Spaltenpermutation verteilt, und die Anzahl der unterschiedlich stark gewichteten bzw. unterschiedlich zuverlässigen Punkte oder Symbole des jeweils verwendeten Symbolraums teilerfremd sein sollte, so dass sich eine optimale Zuordnung ergibt.

Bei Anforderung mehrerer Wiederholungsdatenpakete ist es vorteilhaft, wenn das jeweils angewendete Ratenanpassungsmuster, d.h. das jeweilige Punktierung/Repetierungsmuster, von Wiederholungsdatenpaket zu Wiederholungsdatenpaket verschoben angewendet wird.

Mit Hilfe der im Rahmen der vorliegenden Erfindung vorgeschlagenen Verschiebung der Ratenanpassungsmuster zwischen dem ursprünglich gesendeten Datenpaket einerseits zu dem nachfolgenden Wiederholungsdatenpaket bzw. den nachfolgenden Wiederholungsdatenpaketen andererseits wird zwar ein und dieselbe Coderate erhalten, die Übertragungsqualität und die Bitfehlerrate kann jedoch verbessert werden.

Allgemein weist die erfindungsgemäß vorgeschlagene Vorgehensweise gegenüber der eingangs erläuterten und aus dem Stand der Technik bekannten Vorgehensweise eine deutlich geringere Komplexität auf, wobei zur Realisierung der vorliegenden Erfindung insbesondere keine neuen Verfahrensschritte implementiert werden müssen.

Die vorliegende Erfindung wird nachfolgend näher unter Bezugnahme auf die beigefügte Zeichnung anhand bevorzugter Ausführungsbeispiele einer paketorientierten Datenübertragung in einem Mobilfunksystem erläutert, wobei die vorliegende Erfindung selbstverständlich nicht auf Mobilfunksysteme beschränkt ist, sondern allgemein in jeder Art von Kommmunikationssystemen eingesetzt werden kann, in denen ein ARQ-Verfahren zur Datenübertragung vorgesehen ist.

Figur 1 zeigt eine Darstellung zur Verdeutlichung der Signalverarbeitung gemäß einem paketorientierten ARQ-Verfahren der vorliegenden Erfindung,

Figur 2 zeigt eine Darstellung zur Verdeutlichung der Kommmunikation in einem Mobilfunksystem,

Figur 3 zeigt einen Ratenanpassungsalgorithmus, welcher beispielsweise im Rahmen der vorliegenden Erfindung zur Ratenanpassung eingesetzt werden kann,

Figur 4A-4D zeigen Darstellungen zur Verdeutlichung der Abbildung von Bits eines ursprünglich gesendeten Datenpakets bzw. von entsprechenden Wiederholungsdatenpaketen auf QAM-Symbole gemäß dem Stand der Technik,

Figur 5 zeigt ein vereinfachtes Blockschaltbild einer Ratenanpassung,

Figur 6 zeigt eine grafische Veranschaulichung eines Ratenanpassungsmodus,

Figur 7 zeigt eine grafische Veranschaulichung eines Ratenanpassungsmodus,

Figur 8 zeigt ein vereinfachtes Blockschaltbild einer Ratenanpassung,

Figur 9 zeigt ein vereinfachtes Blockschaltbild einer Ratenanpassung.

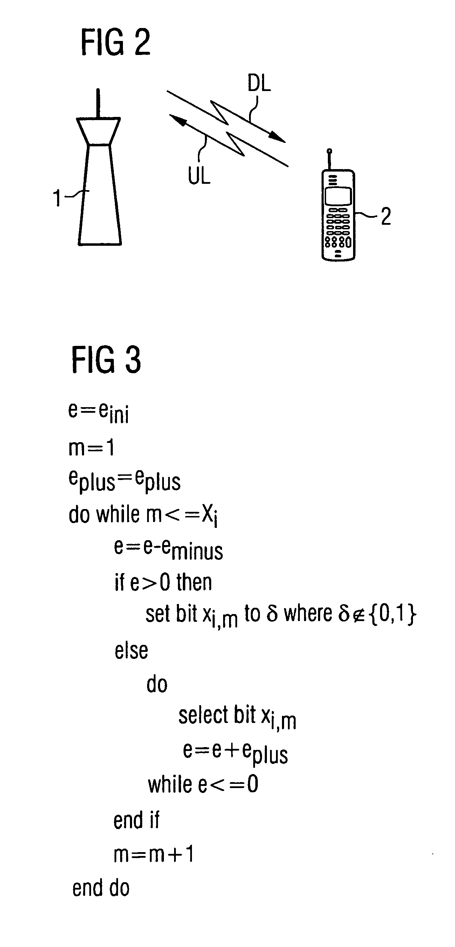

Wie bereits zuvor erläutert worden ist, wird nachfolgend davon ausgegangen, dass mit Hilfe der vorliegenden Erfindung eine paketorientierte Datenübertragung in einem Mobilfunksystem, wie es beispielsweise schematisch in Figur 2 gezeigt ist, realisiert werden soll. Dabei ist in Figur 2 beispielhaft die Kommmunikation zwischen einer Basisstation 1 und einer Mobilstation 2 eines Mobilfunksystems, z.B. eines UMTS-Mobilfunksystems, dargestellt. Die Übertragung von Informationen von der Basisstation 1 zu der Mobilstation 2 erfolgt über den sogenannten "Downlink"-Kanal DL, während die Übertragung der Informationen von der Mobilstation 2 zu der Basisstation 1 über den sogenannten "Uplink"-Kanal UL erfolgt.

Die vorliegende Erfindung wird nachfolgend beispielhaft anhand einer paketorientierten Datenübertragung von der Basisstation 1 an die Mobilstation 2, d.h. anhand einer paketorientierten Datenübertragung über den "Downlink"-Kanal erläutert, wobei die vorliegende Erfindung jedoch analog auf eine Datenübertragung über den "Uplink"-Kanal anwendbar ist. Des Weiteren wird die vorliegende Erfindung nachfolgend anhand der in dem jeweiligen Sender durchzuführenden Signalverarbeitungsmaßnahmen erläutert, wobei jedoch zu beachten ist, dass in dem jeweiligen Empfänger zur Auswertung der auf diese Weise senderseitig verarbeiteten Daten eine entsprechende Signalverarbeitung in umgekehrter Reihenfolge erforderlich ist, so dass von der vorliegenden Erfindung nicht nur die Senderseite, sondern auch die Empfängerseite betroffen ist.

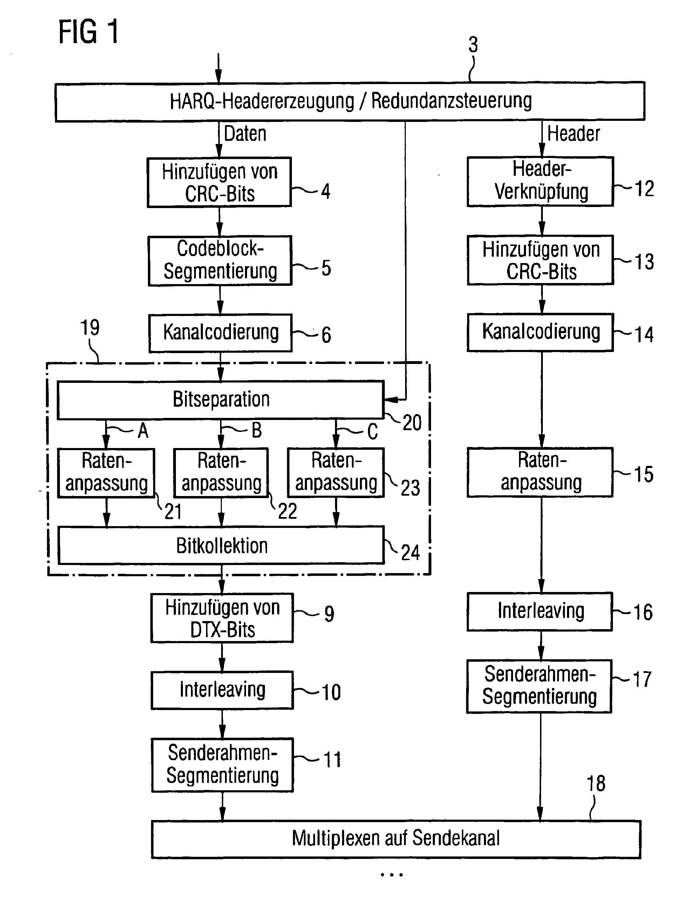

In Figur 1 ist die Signalverarbeitung der in den Datenpaketen zu übertragenden Daten- und Headerinformationen nach einem erfindungsgemäßen Hybrid-ARQ-Verfahren dargestellt.

Auf der Headerseite werden die von einem Funktionsblock 3 erzeugten Headerinformationen einem Funktionsblock 12 zugeführt, welcher dafür sorgt, dass sämtliche Header von allen Datenpaketen, die in ein und demselben Funkpaket gesendet werden sollen, zu einem einzigen Header zusammengefasst werden (sogenannte "Header Concatenation"). Ein Funktionsblock 13 fügt den daraus resultierenden Headerinformationen CRC-Bits zur Headererkennung hinzu. Anschließend wird von einem Funktionsblock 14 eine Kanalcodierung und von einem Funktionsblock 15 eine Ratenanpassung des daraus resultierenden Bitstroms durchgeführt. Ein Interleaver 16 bewirkt, dass die ihm zugeführten Symbole bzw. Bits auf bestimmte Art und Weise umgeordnet und zeitlich gespreizt werden. Die von dem Interleaver 16 ausgegebenen Datenblöcke werden von einem Funktionsblock 17 den einzelnen Sende- bzw. Funkrahmen zugeordnet (sogenannte "Radio Frame Segmentation").

Auf der Datenseite ist ebenso ein Funktionsblock 4 zum Hinzufügen von CRC-Bits vorgesehen. Ein Funktionsblock 5 dient zur Aufspaltung der einem Kanalcodierer 6 zugeführten Daten derart, dass von dem Kanalcodierer 6 stets eine auf eine bestimmte Bitanzahl beschränkte Codierung durchgeführt werden kann.

Durch die von dem Kanalcodierer 6 durchgeführte Kanalcodierung wird den eigentlich zu sendenden Daten redundante Information hinzugefügt. Das hat zur Folge, dass mehrere nacheinander gesendete Datenpakete Bits mit gleichem Informationsursprung aufweisen.

Die von dem Kanalcodierer 6 ausgegebenen Bits werden einem Funktionsblock 19 zugeführt, welcher durch Ausblenden bzw. Weglassen einzelner Bits (sogenannte Punktierung) oder durch Wiederholen einzelner Bits (sogenannte Repetierung) die Bitrate des Bitstroms entsprechend einstellt. Von einem anschließenden Funktionsblock 9 können dem Datenstrom sogenannte DTX-Bits ("Discontinuous Transmission") hinzugefügt werden. Des weiteren sind auch auf der Datenseite Funktionsblöcke 10 und 11 vorgesehen, welche dieselben Funktionen wie die auf der Headerseite vorgesehenen Funktionsblöcke 16 und 17 wahrnehmen.

Abschließend werden die auf der Daten- und Headerseite ausgegebenen Bits von einem Funktionsblock 18 auf den jeweils vorhanden physikalischen Übertragungs- bzw. Sendekanal abgebildet bzw. gemultiplexed (sogenanntes "Multiplexing") und mit Hilfe einer geeigneten Modulation, beispielsweise einer QAM-Modulation, an den Empfänger übertragen.

Bei dem Hybrid-ARQ-Typ I-Verfahren wird bei einem fehlerhaften Empfang bzw. einer fehlerhaften Decodierung eines Datenpakets durch den Empfänger ein Wiederholungsdatenpaket angefordert, welches mit dem zuvor gesendeten und fehlerhaft empfangenen Datenpaket ganz oder teilweise identisch ist. Abhängig davon, ob das Wiederholungsdatenpaket weniger oder gleich viele Daten wie das ursprüngliche Datenpaket aufweist, wird von einer vollen oder partiellen Wiederholung gesprochen. Das Datenpaket und das jeweilige Wiederholungsdatenpaket weisen somit Bits mit einem zumindest teilweise gleichen Informationsursprung auf. Der Empfänger kann somit durch gemeinsame Auswertung des ursprünglich gesendeten Datenpakets sowie der angeforderten nachfolgenden Wiederholungsdatenpakete die ursprünglich gesendete Information mit besserer Qualität wiedergewinnen.

Die vorliegende Erfindung betrifft im Wesentlichen den in Figur 1 gezeigten Funktionsabschnitt 19. Dieser Funktionsabschnitt 19 umfasst einen Funktionsblock 20, welcher in Abhängigkeit von einer Ansteuerung durch den Funktionsblock 3 die von dem vorgeschalteten Kanalcodierer 6 ausgegebenen codierten Bits auf mindestens zwei parallele Teilbitströme aufteilt, welche jeweils separat, d.h. unabhängig voneinander, einer Ratenanpassung unterzogen werden. In Figur 1 sind diesbezüglich drei Teilbitströme A-C dargestellt, wobei für jeden Teilbitstrom ein Funktionsblock 21-23 zur Durchführung einer entsprechenden Ratenanpassung, d.h. zur Punktierung oder Repetierung einzelner Bits, vorgesehen ist. Auf diese Weise entstehen mehrere unterschiedlich codierte parallele Teilbitströme, welche einem weiteren Funktionsblock 24 zugeführt werden. Dieser weitere Funktionsblock 24 hat die Aufgabe, die einzelnen Bits der parallelen Bitströme in derselben Reihenfolge, welche von dem Funktionsblock 20 für die Bitseparation, d.h. für die Aufteilung auf einzelnen parallelen Teilbitströme, verwendet worden ist, aufzusammeln (Bitkollek-tion). Auf diese Weise wird sichergestellt, dass sich insgesamt die Reihenfolge der nach der Ratenanpassung übriggebliebenen Bits nicht ändert.

Wie bereits zuvor erläutert worden ist, kann die für die einzelnen Teilbitströme A-C vorgesehene Ratenanpassung durch die Funktionsblöcke 21-23 vollkommen unabhängig voneinander erfolgen. Insbesondere können auch die Bits eines oder mehrerer Teilbitströme überhaupt keiner Punktierung oder Repetierung unterzogen werden. Insgesamt ist die Ratenanpassung der einzelnen parallelen Teilbitströme A-C so zu wählen, dass von dem gesamten Funktionsabschnitt 19 auf den von dem Funktionsblock 6 ausgegebenen kanalcodierten Bitstrom pro Datenpaket bzw. Wiederholungsdatenpaket ein gewünschtes Ratenanpassungsmuster angewendet wird. Mit der in Figur 1 gezeigten Realisierung des Funktionsabschnitts 19 mit mehreren parallel durchgeführten Ratenanpassungen kann eine äußerst hohe Flexibilität bei der Codierung erzielt werden.

Der Funktionsabschnitt 19 ist derart ausgestaltet, dass er in Abhängigkeit von der Ansteuerung durch den Funktionsblock 3 auf die Bits eines Wiederholungsdatenpakets ein anderes Ratenanpassungsmuster als auf die Bits des entsprechenden ursprünglich gesendeten Datenpakets anwendet. D.h. dem Funktionsabschnitt 19 wird von dem Funktionsblock 3 mitgeteilt, ob von dem jeweiligen Empfänger ein Wiederholungsdatenpaket angefordert worden ist, wobei der Funktionsabschnitt 19 in diesem Fall die von den einzelnen Funktionsblöcken 21-23 realisierten Ratenanpassungsmuster derart wählt bzw. einstellt, dass insgesamt die Bits des Wiederholungsdatenpakets mit einem anderen Ratenanpassungsmuster als die Bits des zugrundliegenden ursprünglich gesendeten Datenpakets verarbeitet werden.

Die insgesamt von dem Funktionsabschnitt 19 realisierte Ratenanpassung kann beispielsweise gemäß dem in Figur 3 dargestellten Ratenanpassungsalgorithmus, welcher an sich bereits aus dem Stand der Technik bekannt ist, durchgeführt werden.

Der im UMTS Standard enthaltene Rate Matching (Ratenanpassungs) Algorithmus ist in [25.212] beschrieben. Als wesentliche Parameter verwendet er:

- $X_b$ : Anzahl codierter Bits pro Paket im Bitstrom b
- $e_{ini}$: Anfangs-Fehlerwert $(N_{TTI} / 3)$
- $e_{plus}$: Inkrement des Fehlerwertes bei Punktierung / Repetition
- $e_{minus}$: Dekrement des Fehlerwertes pro Ausgangsbit

Diese Parameter sind im bestehenden Standard z. B. für den Downlink turbocodierter Transportkanäle mit fester Bitposition (Kapitel 4.2.7.2.1 in [25.212]) im Falle von Punktierung wie folgt zu ermitteln:

$$e_{ini} = N_{max} \cdot \qquad\qquad (5.1)$$

Hierbei bezeichnet $N_{max}$ das über alle Transportformate und Transportkanäle ermittelte Maximum der Anzahl Bits pro parity Bitstrom vor dem Rate Matching. Die Inkremente und Dekremente des Fehlerwerts berechnen sich zu:

$$e_{plus} = a \times N_{max} \quad, \quad e_{minus} = a \times \left|\Delta N_i^b\right|, \qquad\qquad (5.2)$$

wobei $a = 2$ für den ersten parity Bitstrom und $a = 1$ für den zweiten parity Bitstrom gilt. $\left|\Delta N_i^b\right|$ ist die Anzahl der pro Bitstrom $b$ punktierten Bits für den Transportkanal $i$.

Dabei wird insbesondere ein Ratenanpassungsparameter $e_{ini}$ verwendet, welcher einen für die jeweils durchgeführte Ratenanpassung gültigen Offsetwert hinsichtlich des jeweils angewendeten Ratenanpassungsmusters bezeichnet. Zu Beginn des in Figur 3 dargestellten Ratenanpassungsalgorithmus wird eine Fehlervariable e mit diesem Offsetwert $e_{ini}$ initialisiert, wobei der Fehler e im Falle einer Punktierung beispielsweise das Verhältnis zwischen der augenblicklichen Punktierungsrate und der gewünschten Punktierungsrate bezeichnet.

Anschließend wird der Index m des augenblicklich zu verarbeitenden Bits auf das erste Bit, d.h. auf den Wert 1 gesetzt und ein Hilfsfehlerparameter $e_{plus}$ initialisiert.

Für sämtliche Bits des jeweils zu verarbeitenden Datenpakets Nr. i wird anschließend eine Schleife durchlaufen, wobei die Bitanzahl des jeweiligen Datenpakets mit $X_i$ bezeichnet ist.

Innerhalb dieser Schleife wird zunächst der Fehler e unter Verwendung eines weiteren Hilfsfehlerparameters $e_{minus}$ erneuert und geprüft, ob der daraus resultierende Fehler e größer als Null ist, um auf diese Weise festzustellen, ob das entsprechende Bit punktiert werden soll oder nicht. Ist die zuvor erwähnte Bedingung erfüllt, wird das entsprechende Bit auf einen Hilfswert δ gesetzt und somit punktiert, d.h. für die nachfolgende Datenübertragung gesperrt.

Ist hingegen die zuvor genannte Bedingung nicht erfüllt, wird das entsprechende Bit für die Datenübertragung ausgewählt und der Fehler e unter Verwendung des erstgenannten Hilfsfehlerparameters $e_{plus}$ neu berechnet.

Zum Abschluss des Ratenanpassungs- bzw. Punktierungsalgorithmus wird der Bitindex m inkrementiert und somit das nächste Bit für die zuvor erläuterte Verarbeitung ausgewählt.

Das auf die Bits eines Datenpakets bzw. Wiederholungsdatenpakets angewendete Ratenanpassungsmuster kann wesentlich durch entsprechende Wahl des Offsetwerts $e_{ini}$ beeinflusst werden. Durch Variation dieses Offsetwerts $e_{ini}$ kann somit auf ein Wiederholungsdatenpaket ein anderes Ratenanpassungsmuster als auf das entsprechende ursprünglich gesendete Datenpaket angewendet werden, wobei die Ratenanpassung insbesondere bezogen auf die Paritätsbits der einzelnen Teilbitströme A-C (vergleiche Figur 1) angewendet werden kann.

Da der Empfänger des jeweils auf diese Art und Weise verarbeiteten Datenpakets bzw. Wiederholungsdatenpakets das jeweils verwendete Ratenanpassungsmuster bzw. den jeweils verwendeten Offsetwert $e_{ini}$ kennen muss, kann die Variation des Offsetwerts $e_{ini}$ beispielsweise synchron mit dem jeweils gesendeten Zeitschlitz und/oder synchron mit der Nummer des jeweils gesendeten Rahmens erfolgen, so dass der Empfänger in Abhängigkeit von der Nummer des jeweils empfangenen Zeitschlitzes bzw. in Abhängigkeit von der Nummer des jeweils empfangenen Rahmens auf den jeweils verwendeten Offsetwert $e_{ini}$ und somit auf das jeweils angewendete Ratenanpassungsmuster schließen kann. Durch ein $e_{ini}$ ist dabei jeweils eine sogenannte Redundanzversion definiert.

Der Offsetwert $e_{ini}$ wird für das ursprünglich gesendete Datenpaket und das Wiederholungsdatenpaket vorteilhafterweise derart gewählt, dass die Verschiebung der daraus resultierenden Ratenanpassungsmuster zueinander maximal, d.h. möglichst groß, ist. Darüber hinaus ist der Offsetwert $e_{ini}$ für das ursprünglich gesendete Datenpaket und das Wiederholungsdatenpaket vorteilhafterweise derart zu wählen, dass möglichst viele der sich einander entsprechenden Bits der beiden Pakete bei der abschließenden Modulation, insbesondere der QAM-Modulation, auf unterschiedliche Punkte, d.h. unterschiedliche QAM-Symbole, des entsprechenden zweidimensionalen QAM-Symbolraums abgebildet werden (vergleiche diesbezüglich beispielsweise die Abbildungen von Figur 4).

Dies kann beispielsweise dadurch erreicht werden, dass der Offsetwert $e_{ini}$ für das ursprüngliche Datenpaket auf $e_{ini} = 0$ und für das nachfolgende Wiederholungsdatenpaket auf $e_{ini} = e_{plus}$ gesetzt wird. Im ersten Fall wird dadurch das erste Bit punktiert, während im zweiten Fall das letzte Bit des Wiederholungsdatenpakets punktiert wird, so dass sich entsprechend auch die Position aller dazwischen liegenden Bits jeweils um eine Stelle verschiebt. Es ist somit sichergestellt, dass (bei geeigneter Ausgestaltung des nachfolgenden Interleavers 10 sowie des nachfolgenden "Gray-Mapping" zur Realisierung einer entsprechenden Modulation) ein Bit bei beiden übertragungen auf unterschiedliche Punkte des jeweiligen zweidimensionalen Symbolraums abgebildet wird, was somit vorteilhaft für eine gleichmäßige Verteilung der Zuverlässigkeit der übertragenen Bits ist. Ein zusätzlicher Vorteil beruht darin, dass in den Wiederholungsdatenpaketen zusätzliche neue Information enthalten ist und nicht lediglich die Bits des ursprünglichen Datenpakets wiederholt werden, so dass sich auch hierdurch ein Gewinn ergibt.

Die Belegung des Offsetwerts $e_{ini}$ kann für die einzelnen Teilbitströme A-C koordiniert durchgeführt werden, so dass beispielsweise abhängig von der Wahl des jeweils verwendeten Algorithmus $e_{ini}$ für die einzelnen Teilbitströme A-C abwechselnd mit Null und $e_{plus}$ bzw. gegengleich vorbelegt wird.

Bei Übertragung mehrerer Wiederholungsdatenpakete sollte vorteilhafterweise das Ratenanpassungsmuster, d.h. das jeweils gewählte Punktierungs- bzw. Repetierungsmuster, von Wiederholungsdatenpaket zu Wiederholungsdatenpaket verschoben angewendet werden. Für das ursprünglich gesendete Datenpaket und das erste Wiederholungsdatenpaket kann der Offsetwert $e_{ini}$ wie zuvor beschrieben mit Null bzw. $e_{plus}$ vorbelegt werden, wobei für anschließende Wiederholungen davon abweichende Werte verwendet werden sollten. So kann beispielsweise bei der k-ten Wiederholung als Offsetwert $e_{ini}$ der Wert $k \cdot e_{minus}$ verwendet werden, was eine Verschiebung des Ratenanpassungsmusters um k Bits bewirkt. Ebenso kann für das Wiederholungsdatenpaket Nummer 2k als Offsetwert $e_{ini}$ der Wert $k \cdot e_{minus}$ und für das Wiederholungsdatenpaket Nummer 2k + 1 als Offsetwert $e_{ini}$ der Wert $k \cdot e_{minus} + e_{plus}$ verwendet werden. Auf diese Weise erhält man für alle Bits (mit Ausnahme der Bits unmittelbar am Anfang vor der ersten Punktierung/ Repetierung und der Bits unmittelbar am Ende nach der letzten Punktierung/Repetierung) bei aufeinanderfolgenden Wiederholungsdatenpaketen eine unterschiedliche Zuordnung zu den einzelnen Punkten bzw. QAM-Symbolen in dem QAM-Symbolraum, wobei zusätzlich unterschiedliche Bits punktiert/repetiert werden.

Je nach Code-Rate stehen unterschiedlich viele parity Bits pro Kanalencodierungsvorgang zur Verfügung. Somit ist auch die Anzahl der möglichen Redundanzversionen, die komplett aus bisher noch nicht gesendeten parity Bits bestehen und daher maximalen IR Gewinn versprechen, von der Code-Rate abhängig. Daher sieht eine andere Ausführungsvariante vor, diese maximale Anzahl der Redundanzversionen $N_{pat}$ im Empfänger ohne zusätzliche Signalisierung zu errechnen. Die Redundanzversion $R=\{0,1,2, ...,N_{pat} - 1\}$, die im aktuellen Paket Anwendung findet, wird z. B. aus der System Frame Number (SFN) durch

$$R = SFN \bmod N_{pat}$$

ermittelt. Falls Paketnummer und Frame-Grenze nicht identisch sind, kann auch die Paket- bzw. Slotnummer zu einer solchen Ermittlung der Redundanzversion herangezogen werden.

Falls die Redundanzversion R nach dieser zuletzt genannten Gleichung ermittelt wird, besteht darüber hinaus die Möglichkeit, im Sender Maßnahmen zu ergreifen, welche die Abfolge der verschiedenen Redundanzversionen für jeden Block optimiert. Dadurch wird im sog. Scheduling-Algorithmus, der bestimmt welcher Benutzer im folgenden Übertragungsintervall bedient wird, ein zusätzliches Entscheidungskriterium eingeführt. Dieses Kriterium berechnet für alle Benutzer, für die aktuell Daten vorliegen, die sich im nächsten Übertragungsintervall ergebende Redundanzversion R. Neben einer Auswertung der üblichen Kriterien (wie Signal-zu-Rausch-Verhältnis, geforderte Dienstqualität, usw.) wird derjenige Nutzer bevorzugt, für den sich im betrachteten Intervall die beste Ergänzung der bisher übermittelten Redundanz ergibt. Dadurch wird die Wahrscheinlichkeit, dass nach der Übermittlung dieses Blocks eine Decodierung erfolgreich stattfinden kann maximiert und somit auch die Kapazität des Kommunikationssystems erhöht. Dadurch kann trotz der Berechnung der Redundanzversion aus der SFN der IR Gewinn optimiert werden, ohne explizite Signalisierung zu benötigen. Zum Beispiel wird der Scheduling-Algorithmus mit geringerer Priorität Pakete an solche Mobilstationen senden, bei denen im aktuellen Intervall ein Wiederholungspaket mit einer Redundanzversion gesendet würde, die sie bereits in einem früheren Paket erhalten haben, da dann kein IR gain auftritt.

Für den in Figur 1 gezeigten Funktionsblock 10 sollte ein Interleaver verwendet werden, welcher kein zufälliges Interleaving sondern ein sehr reguläres Interleaving durchführt. So könnte beispielsweise für den Funktionsblock 10 ein BlockInterleaver verwendet werden. Ist der als Funktionsblock 10 verwendete Interleaver ein sehr regulärer Interleaver und ist die Spaltenanzahl, auf welche der Interleaver die ihm zugeführten Bits verteilt, und die Anzahl der unterschiedlich stark gewichteten Punkte in dem zweidimensionalen QAM-Symbolraum bzw. allgemein die Anzahl der unterschiedlich stark gewichteten Modulationspunkte teilerfremd, so ergibt sich eine optimale Zuordnung. Gemäß dem derzeitigen Stand der UMTS-Standardisierung wird als Interleaver ein Blockinterleaver mit zusätzlicher Spaltenvertauschung vorgeschlagen, welcher benachbarte Bits auf Spalten verteilt, die Vielfache von "5" voneinander entfernt sind, und anschließend die Spalten vertauscht. Bei Verwendung von 30 Spalten erfolgt die Spaltenpermutation z.B. gemäß dem folgenden Schema: Spalte Nr. 0, 20, 10, 5, 15, 25, 3, 13, 23, 8... Da der Wert "5" mit der Anzahl der unterschiedlichen Bits beispielsweise bei einer 16-QAM-Modulation (nämlich zwei Bits) und einer 64-QAM-Modulation (nämlich drei Bits) teilerfremd ist, ergibt sich z.B. bei dieser Kombination eine gute Verwürfelung bzw. eine gute Abbildung auf die entsprechenden Modulationspunkte.

Gemäß einem weiteren bevorzugten Ausführungsbeispiel kann das für das ursprünglich gesendete Datenpaket bzw. das Wiederholungsdatenpaket oder die Wiederholungsdatenpakete gewählte Bitratenanpassungsmuster derart gewählt werden, dass sich die einzelnen Bitratenanpassungsmuster lediglich am Anfang und am Ende voneinander unterscheiden, während sie in einem mittleren Bereich identisch sind, wobei die Punktierungs- bzw. Repetierungsraten der einzelnen Bitratenanpassungsmuster gleich sind. Dies ist insbesondere für hohe Datenraten geeignet, da hierdurch der Speicherbedarf im Empfänger gegenüber der zuvor beschriebenen Ausführungsform, bei welcher der Offsetwert variiert wird, in der Größenordnung der jeweils verwendeten Punktierungs- bzw. Repetierungsrate reduziert werden kann. Der erzielte Performance-Gewinn gegenüber herkömmlichen Verfahren besteht dann im Wesentlichen aus der gleichmäßigeren Verteilung der übertragenen Information auf die unterschiedlich stark geschützten bzw. unterschiedlich zuverlässigen Bits der QAM-Symbole. Der bei diesem Ausführungsbeispiel nicht nutzbare Gewinn durch eine in den Wiederholungsdatenpaketen neu hinzugefügte Information wird durch den Vorteil des reduzierten Speicherbedarfs entsprechend aufgewogen.

Gemäß einer weiteren Ausführungsvariante des zuvor beschriebenen Prinzips kann auch zunächst ein nachfolgend als Basismuster bezeichnetes Punktierungs-/Repetierungsmuster bestimmt werden, durch welches n Bits mehr punktiert bzw. repetiert werden als ursprünglich vorgesehen war. Basierend auf diesem Basismuster werden dann n unterschiedliche Repetierungsmuster dadurch abgeleitet, dass von diesem Basismuster am Anfang die ersten j Punktierungen bzw. Repetierungen nicht durchgeführt und am Ende die letzten n-j Punktierungen bzw. Repetierungen ausgelassen werden. Dabei kann j einem Wert 0,1,...n entsprechen. Durch diese Maßnahme wird das Basismuster am Anfang und am Ende an insgesamt n Stellen beschnitten, wobei es n verschiedene Möglichkeiten gibt, die alle zu einer unterschiedlichen Zuordnung der dazwischen liegenden Bits auf die unterschiedlichen Bits der QAM-Symbole führen. Für die Daten- und Wiederholungsdatenpakete werden dabei eine unterschiedliche Anzahl n von Punktierungen bzw. Repetierungen am Anfang und am Ende ausgelassen, wobei die gesamte Punktierungs- bzw. Repetierungsrate konstant bleibt.

Im Folgenden werden weitere Ausführungsvarianten der Erfindung erläutert, welche einzeln und in beliebiger Kombination mit der Erfindung und ihren zuvor bereits genannten Weiterbildungen durch die Erfindung umfasst sind, und welche auch zeigen, wie die Vorbelegung der verschiedenen Parameter des Rate Matching (Ratenanpassung) Algorithmus gesteuert werden muss, damit Rate Matching Muster resultieren, die sowohl die Mittelung der Bitzuverlässigkeiten als auch den Codiergewinn durch IR (Incremental Redundancy), das heißt den Codiergewinn, der durch das wiederholte Übertragen eines Datenpaketes, auf das unterschiedliche Rate Matching Muster angewendet werden, geeignet kombinieren. Durch gezielte Steuerung ist es möglich verschiedene Moden zu erzeugen, welche unterschiedlichen Schwerpunkte bzgl. IR-Codiergewinn und Gewinn durch Mittelung der Bitzuverlässigkeiten setzen, so beispielsweise einen - im folgendenden auch "Quasi-Chase-Combining-Mode" genannten Modus, der mittels dem neuen Konzept eines Basismuster, mit minimalem zusätzlichem Speicheraufwand einen idealen Gewinn durch Mittelung der Bitzuverlässigkeiten erreicht, oder sogenannte "kombinierte IR und Symbol Mapping-Moden", für die der IR Gewinn mit zunehmender Punktierungsrate ansteigt und welche es erlauben durch geeignete Vorbelegung der Rate Matching Parameter für jedes Wiederholungspaket den optimalen Arbeitspunkt bzgl. IR Gewinn gegenüber Gewinn durch Mittelung der Bitzuverlässigkeiten einzustellen.

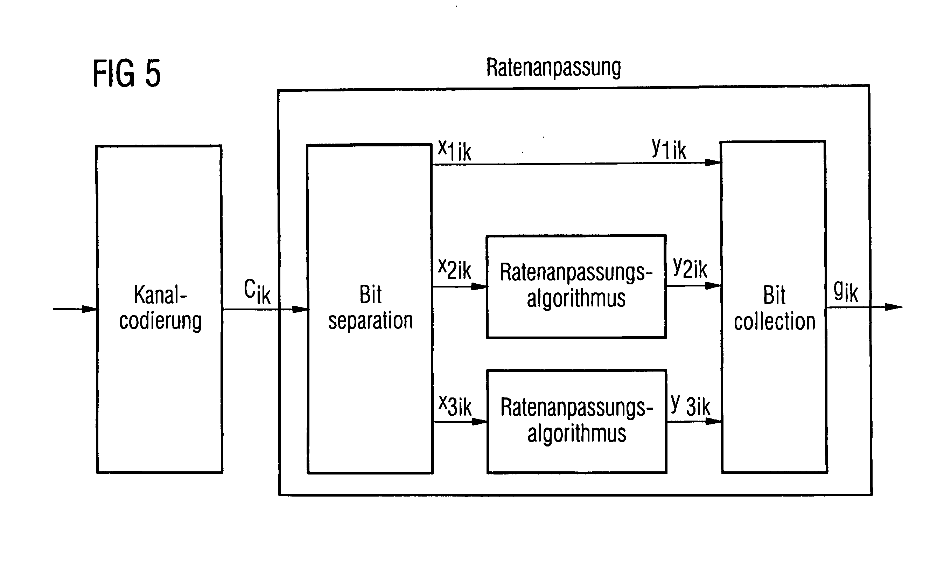

Figur 5 zeigt beispielhaft die Signalverarbeitungskette für HSDPA (high speed downlink packet access), einer Weiterentwicklung des UMTS Standards, die paketvermittelte Verbindungen mit hoher Datenrate ermöglicht. Wichtig ist in diesem Zusammenhang, dass nach der Kanalcodierung eine Bitseparation durchgeführt wird, welche systematische und parity Bits des Turbo Codes trennt. Das Rate Matching wird nur in den $p$ parity Bitströmen (hier 2 Ströme) durchgeführt und zwar so, dass jeweils ca. $N_p / p$ Bits punktiert bzw. repetiert werden ($p = 2$ in Figur 5).

Alternativ dazu kann, insbesondere im Falle der Repetierung, auch für die systematischen Bits ein Rate-Matching Block vorgesehen sein, oder auf die Bit Separation verzichtet werden und für den Gesamtbitstrom ein Rate-Matching Block vorgesehen sein.

In einem Symbol der 16-QAM befinden sich 2 gut geschützte Bits (im Folgenden mit H für high reliability bezeichnet) und 2 schlecht geschützte Bits (L für low reliability), d. h. k = 2. Diese Bit-zu-Symbol-Zuordnung wird durch {H, H, L, L} dargestellt. Beträgt in den verschiedenen Redundanzversionen die Differenz der bisher punktierten / repetierten Bits $\Delta B = k \times (2 \times m - 1)$, mit $m$ ganzzahlig, so ergibt sich eine Umkehrung der Zuordnung der aktuellen Bits auf die jeweils andere Bitzuverlässigkeit: {L, L, H, H}. Wurde ein Bit z. B. bei der ersten Übertragung auf einem L Bit gesendet, so wird es in der zweiten Übertragung garantiert auf einem H Bit übertragen. Für $\Delta B = 1 \times (2 \times m - 1)$ findet diese Umkehrung immerhin noch für 50% der Bits statt.

Ein 64-QAM-Symbol besteht aus je zwei Bit (d. h. auch hier $k = 2$) mit hoher, mittlerer und niedriger Zuverlässigkeit: {H, H, M, M, L, L}. Hierbei wurde die zusätzliche Bitklasse M für medium reliability eingeführt. Gilt für die aktuellen Bits nun $\Delta B = k \times (3 \times m - 2)$, so wird die Zuordnung zyklisch um eine Bitklasse vertauscht, d. h. {L, L, H, H, M, M}; für $\Delta B = k \times (3 \times m - 1)$ ergibt sich {M, M, L, L, H, H}. Eine ideale Mittelung der Bitzuverlässigkeiten kann also nach 3 Übertragungen eines Pakets erreicht werden. Bereits nach zwei Übertragungen ergibt sich jedoch ein partieller Mittelungseffekt.

Auch für Modulationsarten mit unterschiedlicher Anzahl Bits pro Bitklasse kann ein geeigneter Parameter $k$ gefunden werden. Für die 8-PSK ergeben sich pro Symbol z. B. 2 gut geschützte und 1 schlecht geschütztes Bit: {H, H, L}. Wird nun $k = 1$ gewählt, so ergibt sich für $\Delta B = k \times (3 \times m - 2)$ die Zuordnung {L, H, H}, für $\Delta B = k \times (3 \times m - 1)$ die Zuordnung {H, L, H}, d. h. es wird in beiden Fällen schon nach zwei Übertragungen sichergestellt, dass sich die Bitzuverlässigkeiten ausmitteln.

Werden andere Zuordnungsverfahren der einzelnen Bits zu Symbolpunkten verwendet, so können obige Überlegungen sehr leicht angepasst werden. Wird z. B. für eine 16-QAM die Zuordnung so verändert, dass sich pro Symbol die Folge {H, L, H, L} ergibt, so ergibt sich eine ideale Umkehrung der Bitzuverlässigkeiten für $\Delta B = k \times (2 \times m - 1)$ mit $k = 1$.

Für den "Quasi-Chase-Combining-Mode" wird zugunsten der Minimierung des zusätzliche Speicherbedarfs auf den IR Gewinn weitestgehend verzichtet, dafür jedoch maximaler Gewinn durch Mittelung der Bitzuverlässigkeit erreicht. Dazu wird ein sog. Basismuster generiert, welches auf herkömmliche Art ermittelt wird, jedoch anstatt der ursprünglich benötigten Anzahl punktierter bzw. repetierter Bits $N_p$ wird die erhöhte Anzahl $N_{p,IR} = N_p + k \times (N_{pat} - 1)$, wobei $N_{pat}$ die Anzahl unterschiedlicher Redundanzversionen angibt und $k$ die Anzahl aufeinanderfolgender gleichzuverlässiger Bits pro Symbol. In diesem Mode muss $N_{pat}$ nicht an Hand der Code-Rate ermittelt werden und kann fest vorgewählt werden (z. B. $N_{pat} = 2$ zur Minimierung des Speicherbedarfs). Für jede Übermittlung eines Pakets werden aus diesem Basismuster jeweils $N_p$ Bit ausgewählt, die tatsächlich punktiert / repetiert werden, wobei bei der Auswahl dafür gesorgt werden kann, dass sich die Anzahl bisher punktierten / repetierten Bits in den verschiedenen Wiederholungspaketen gerade um $k$ unterscheidet (siehe auch unten). So wird sichergestellt, dass nach der ersten Wiederholung das Symbol-Mapping der Bits so geändert wird, dass im überwiegenden Teil des Pakets ein Ausgleich der Bitzuverlässigkeit und somit ein Gewinn erreicht wird. Das tatsächliche Punktierungs-/Repetierungs-Muster ist also alleine aus der in der Mobilstation ermittelten Wiederholungsnummer $R$ und den bekannten Rate Matching Parametern ermittelbar. Der Gesamtspeicherbedarf steigt lediglich um $k \times (N_{pat} - 1)$ Bits. Ein weiterer Vorteil ist, dass durch die Verwendung des Basismuster die Überlagerung der verschiedenen Sendungen eines Pakets im Empfänger (sog. Soft Combining) einfach und effizient realisiert werden kann.

Im allgemeinen Fall lassen sich mit diesem Vorgehen auch kombinierte IR-und Symbol-Mapping-Verfahren erzeugen, deren IR Gewinn mit zunehmender Punktierungsrate $N_p$ steigt. Dies ist besonders vorteilhaft, da so dem unvermeidlichen Performance-Verlust in der Decodierung durch Punktierung automatisch entgegengewirkt wird. Dazu werden in den Wiederholungspaketen andere parity bits punktiert. Dies wird dadurch erreicht, dass zunächst wie oben aus dem Basismuster, basierend auf der in der Mobilstation ermittelten Wiederholungsnummer $R$, die jeweilige Redundanzversion erzeugt wird und danach das Punktierungs-/Repetierungs-Muster für jeden parity Bitstrom um $n_{offset}$ Bits zyklisch vertauscht wird. Mit zunehmendem $n_{offset}$ werden die punktierten / repetierten Bits in den unterschiedlichen Redundanzversionen zunehmend gegeneinander verschoben, so dass der erzielbare Gewinn durch inkrementelle Redundanz vergrößert wird. Gleichzeitig nimmt jedoch der prozentuale Anteil Bits ab, welche gegenüber der vorhergehenden Redundanzversion auf einer anderen Bitzuverlässigkeitsstufe übertragen werden, d. h. der Gewinn durch Mittelung der Bitzuverlässigkeiten nimmt ab. Durch Simulationen kann für das jeweilige System hier ein optimaler Arbeitspunkt ermittelt werden und entsprechend der Parameter $n_{offset}$ fest voreingestellt werden, so dass keine zusätzliche Signalisierung nötig ist. Es ist allerdings auch denkbar den Parameter $n_{offset}$ semi-statisch bzw. dynamisch zu ändern, um zwischen den verschiedenen Moden umschalten zu können (der "Quasi-Chase-Combining-Mode" entspricht einem "kombinierten IR-und Symbol-Mapping-Verfahren" mit $n_{offset} = 0$). Der Gesamtspeicherbedarf steigt für $n_{offset} \neq 0$ um $N_p$ x ($N_{pat}$ - 1).

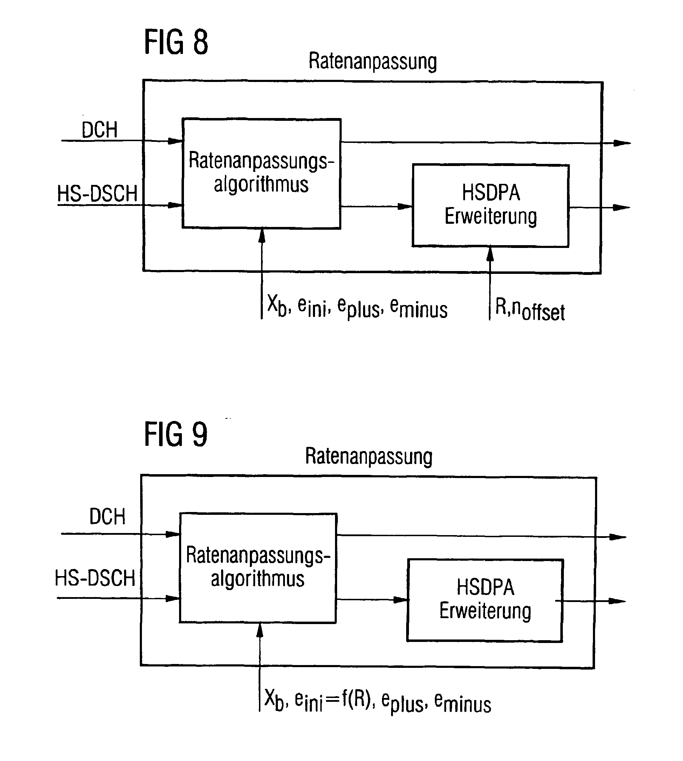

Funktionell kann die Realisierung mittels Basismuster durch eine Wiederverwendung des ohnehin benötigten herkömmlichen Rate Matching Algorithmus und die Nachschaltung einer HSDPA-Erweiterung implementiert werden, wie in Figur 8 dargestellt. In UMTS wird z. B. parallel zu einer HSDPA-Verbindung (als HS-DSCH bezeichnet) stets eine weitere Teilnehmerverbindung unterhalten (DSCH, dedicated channel), so dass der herkömmliche Rate Matching Algorithmus im Empfänger ohnehin benötigt wird. Durch einen modularen Aufbau, wie in Figur 8, kann somit eine effiziente Wiederverwendung von ohnehin im Empfänger benötigten Funktionsblöcken erreicht werden.

Die hier ausgeführte Erfindung verwendet zur Berechnung des Basismuster den selben Algorithmus, lediglich mit einer geänderten Vorbelegung des Parameters $e_{minus}$:

$$e_{minus} = a \cdot \left| \Delta N_i^b - N_{pat} - 1 \right| , \qquad (5.3)$$

wobei $N_{pat}$ die Anzahl der unterschiedlichen Rate-Matching-Muster ist.

Die Anzahl der verwendeten Redundanzversionen kann entweder fest vorgegeben werden, idealer Weise wird er jedoch abhängig von der Code-Rate so berechnet, dass gerade so viele Redundanzversionen erzeugt werden, wie nötig sind, um alle vorhandenen parity Bits mindestens einmal senden zu können. Die Anzahl der Redundanzversionen ergibt sich also durch Aufrundung des Quotienten aus vorhandenen parity Bits zu gesendeten parity Bits pro Paket.

Für niedrige Code Raten ergeben sich nach diesem Kriterium nur sehr wenige Redundanzversionen. Mit dieser Anzahl ist zwar sichergestellt, dass jedes parity Bit mindestens einmal gesendet werden kann, allerdings wird für die einzelnen Bits keine gute Mittelung bezüglich der Anzahl der Verwendungen in den Redundanzversionen erreicht. Diesem kann entgegengewirkt werden, indem man die Anzahl der Redundanzversionen aus dem Quotient der vorhandenen parity Bits zu den punktierten parity Bits pro Paket berechnet. Dann kann erreicht werden, dass jedes parity Bit ca. einmal punktiert wird und ca. $N_{pat}$ - 1 mal übertragen wird und somit für alle Bits ungefähr die gleiche Anzahl an Übertragungen resultiert sobald alle Redundanzversionen gesendet wurden.

Als praktische Realisierung kann die Anzahl der Redundanzversionen aus dem Maximum der beiden obigen Kriterien ermittelt werden, z. B.

$$N_{pat} = \max\left( \left\lceil \frac{N_{ges}}{N_{ges} - N_p} \right\rceil , \left\lceil \frac{N_{ges}}{N_p} \right\rceil \right) \qquad (5.5)$$

Für systematische Codes, wie z. B. den bei UMTS verwendeten Turbo Code kann die Anzahl der Redundanzversionen wie folgt berechnet werden:

$$N_{pat} = \max\left(\left\lceil \frac{p \cdot X_b}{N_{ges} - X_b} \right\rceil, \left\lceil \frac{p \cdot X_b}{(p+1) \cdot X_b - N_{ges}} \right\rceil\right) \qquad (5.5)$$

mit

$$X_b = N_{ges} \cdot R_c + N_{ov}. \qquad (5.6)$$

Darin bezeichnet $N_{ges}$ die Gesamtanzahl Bits pro übertragenem Block, $p$ die Anzahl der parity Bitströme (z. B. $p = 2$ in UMTS), $R_c$ die Code-Rate und $N_{ov}$ sämtliche Overhead-Bits, z. B. für Fehlererkennung (CRC) und Terminierung der Kanalcodierung.

Im Fall von Repetierung, d. h. sehr niedrigen Code-Raten, gelten analoge Überlegungen. Dort kann die Anzahl der Redundanzversionen aus dem Quotienten der Gesamtzahl übertragener Bits durch die Anzahl der repetierten Bits ermittelt werden. Alternativ kann die Repetierungsrate auf eine äquivalente Punktierungsrate umgerechnet werden. Eine Repetierungsrate von 270% würde beispielsweise einer Punktierungsrate von 30% entsprechen, da ja 30 % der Bits nicht dreimal (sondern nur zweimal) repetiert werden können, also eine geringere Verlässlichkeit aufweisen. Der Fall ist somit analog zu einer Punktierungsrate von 30%, nur dass im Fall der Punktierung die Unterschiede größer sind. Anhand dieser äquivalenten Punktierungsrate kann dann die Anzahl der Redundanzversionen wie oben beschrieben berechnet werden.

Nach der Berechnung des Basismuster werden die Rate-Matching-Muster der einzelnen Redundanzversionen $R$ dadurch berechnet, dass in den beiden parity Bitströmen von den im Basismuster als zu punktierende / repetierende Bits gekennzeichnete Bitpositionen jeweils die ersten ($R_{mod}$) und die letzten ($N_{pat}$ - $R_{mod}$) doch genau einmal übertragen werden. Hierbei gilt

$$R_{mod} = R \bmod N_{pat}. \qquad (5.7)$$

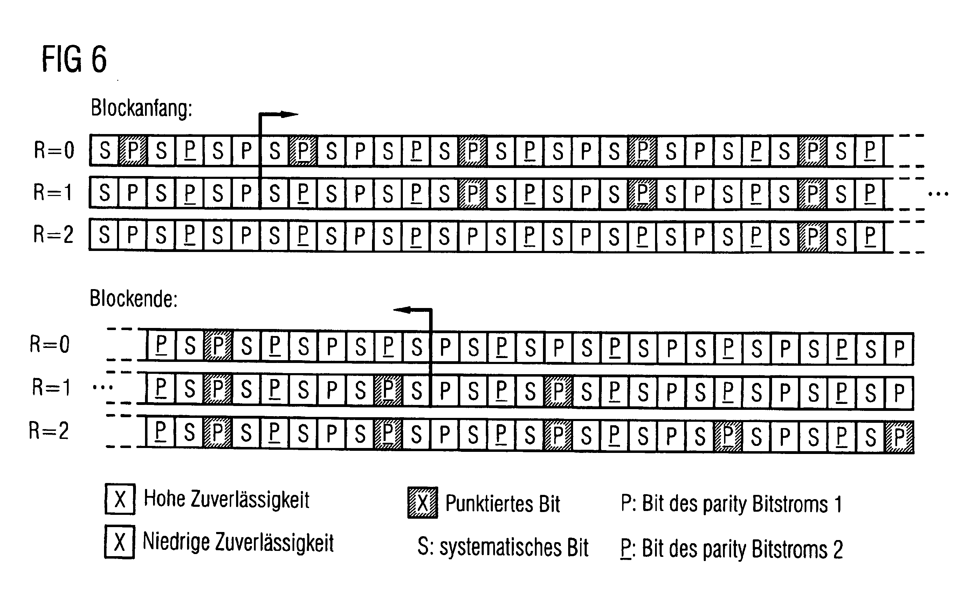

Die sich im Gesamtbitstrom ergebende Rate Matching Muster und die Auswirkung auf die Bitzuordnung innerhalb des Symbols ist in Figur 6 beispielhaft für eine 16-QAM, Code Rate = 1/2, Punktierung und 3 verschiedenen Redundanzversionen dargestellt.

Der Eingangs-Bitstrom enthält jeweils nach einem systematischen Bit abwechselnd ein parity Bit des parity Bitstroms 1 und 2. Figur 6 zeigt wie ausgehend von einem Basismuster jeweils die Punktierung in jedem parity Bitstrom um ein Bit später beginnt und später endet. Nach der Bit-Collection ergibt sich so der in Figur 6 gezeigte Gesamtbitstrom. Abgesehen von kleinen Bereichen am Blockanfang und am Blockende, ergibt sich eine ideale Mittelung der Bitzuverlässigkeiten nach der ersten Wiederholung ($R = 1$), d. h. jeweils gleiche (d. h. untereinander angeordnete) Bits wurden einmal mit hoher Zuverlässigkeit (keine Schattierung) und einmal mit niedriger Zuverlässigkeit (graue Schattierung) gesendet. Der Bereich in dem diese ideale Mittelung erfolgt ist in Figur 6 als Bereich zwischen den beiden dicken Strichen gekennzeichnet. Pro Übertragung werden hier lediglich 2 zusätzliche Bit an inkrementeller Redundanz übertragen. Da im Allgemeinen gilt, dass die Anzahl der zu punktierende Bits wesentlich größer ist als die Anzahl der Redundanzversionen, wirkt sich die Tatsache, dass das Basismuster basierend auf einer erhöhten Anzahl zu punktierender Bits errechnet wird, so gut wie nicht auf die Regelmäßigkeit der Punktierung innerhalb eines Blockes aus - der Einfluss der kleinen Bereiche am Blockanfang und -ende kann vernachlässigt werden.

Die Verwendung eines Basismuster im "Quasi-Chase-Mode" erlaubt einen sehr effizienten Speicherzugriff bei der Überlagerung der verschiedenen Übertragungen eines Blockes für das sog. Soft Combining. Der Soft-Combining Speicher kann in diesem Fall direkt vor dem Rate Matching im Empfänger implementiert werden, so dass der Gesamtspeicherbedarf nach allen Übertragungen nur die Anzahl der übertragenen Bits pro Block plus $R$ x 2 beträgt.

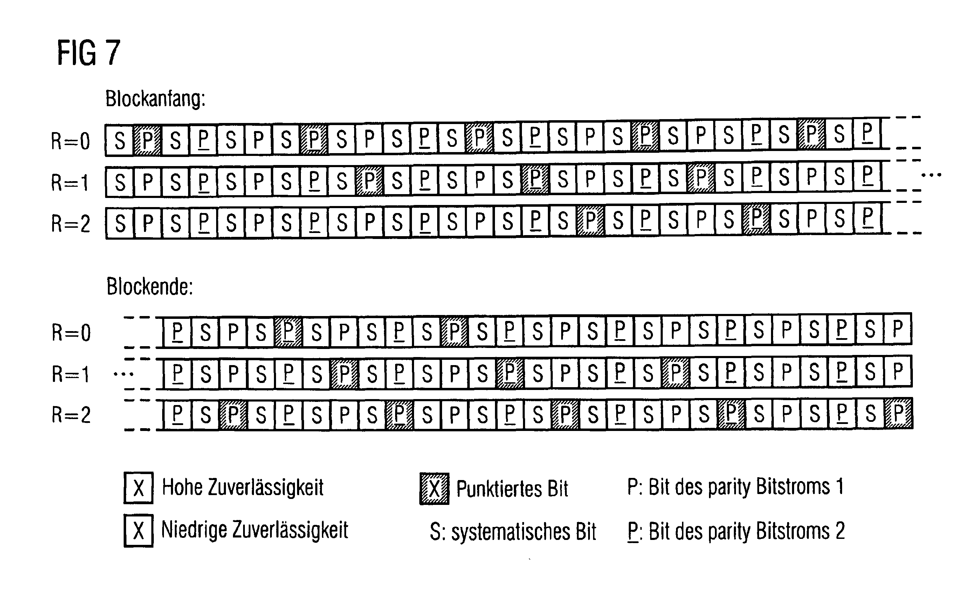

Ein kombinierten IR und Symbol Mapping-Mode lässt sich dadurch realisieren, dass in jedem parity Bitstrom eine zyklische Vertauschung des Rate Matching Musters um $n_{offset}$ Bits durchgeführt wird. Figur 7 zeigt das obige Beispiel für $n_{off-set}$ = 1. Es wird deutlich, dass sich im Gegensatz zu Figur 6 kein zusammenhängender großer Bereich mehr ausbildet, indem nach der 1. Wiederholung die Bitzuverlässigkeiten ausgemittelt sind. Diese Mittelung findet nur noch für einen geringeren Prozentsatz der Bits statt, der Gewinn durch diesen Effekt ist also reduziert. Allerdings werden in diesem Modus mit jeder Wiederholung andere Bits punktiert, so dass jeweils die Anzahl der punktierten Bits an inkrementeller Redundanz hinzugeführt wird und sich somit der IR Gewinn gegenüber Figur 6 erheblich vergrößert.

Gleichzeitig wird auch der Gesamtspeicherbedarf auf die Anzahl der übertragenen Bits pro Block plus $R \times N_p$ ($N_p$: Anzahl der punktierten Bits) vergrößert. Für Repetierung gelten diese Ausführungen in analoger Weise.

Ein kombinierter IR und Symbol Mapping-Mode lässt sich alternativ durch eine geänderte Vorbelegung des Anfangswert der Fehlervariablen $e_{ini}$ für jede Redundanzversion realisieren. Dies wird z. B. dadurch erreicht, dass man in der Bleichung (5.2) für alle parity Bitströme den Parameter $a = 1$ setzt und $e_{ini}$ in jeder Redundanzversion $r$ durch

$$e_{ini}(r) = ((e_{ini}(r-1) - e_{minus} - 1) \bmod e_{plus}) + 1 \qquad (5.8)$$

berechnet. Die mod-Funktion bezeichnet den Rest der Division, hat also in diesem Fall den Wertebereich $\{0, 1, \ldots, e_{plus}-1\}$. Für den Anfangswert gilt

$$e_{ini}(0) = N_{max} \quad \text{und} \quad r = \{1, 2, \ldots, N_{pat}-1\}. \qquad (5.9)$$

Damit wird mit steigendem $r$ das Rate-Matching-Muster stets um eine Bitposition nach vorne verschoben. Die mod-Funktion in Gleichung (5.8) begrenzt den maximal möglichen Versatz so, dass in jeder Redundanzversion exakt gleich viele Punktierungen / Repetierungen stattfinden. Durch diese Wahl kann sichergestellt werden, dass in den unterschiedlichen Redundanzversionen jeweils unterschiedliche parity Bits übertragen werden und somit maximaler IR Gewinn realisiert werden kann. Der erzielbare Gewinn durch Mittelung der Bitzuverlässigkeiten wird bei diesem Verfahren für hohe Code-Raten groß, für niedrigere Code-Raten zeigt sich diesbezüglich einen Vorteil bei der Realisierung über ein Basismuster. Um den Gewinn durch Mittelung der Bitzuverlässigkeiten auch für eine Implementierung per $e_{ini}$ Variation zu maximieren muss die Reihenfolge der verwendeten Redundanzversionen optimiert werden, z. B. indem man bei einer 16-QAM für die erste Übertragung $r = 0$ und für die zweite $r = N_{pat}-1$ verwendet.

Diese Ausführungsvarianten lassen sich auch mit einer Variation des Anfangswerts der Fehlervariable $e_{ini}$ für jede Übertragung eines Pakets kombinieren. Es entstehen dann kombinierte IR und Symbol-Mapping Moden, für die der IR Gewinn mit zunehmender Punktierungsrate ansteigt und welche es erlauben, durch geeignete Vorbelegung der $e_{ini}$-Werte für jedes Wiederholungspaket den optimalen Arbeitspunkt bzgl. IR Gewinn gegenüber Gewinn durch Mittelung der Bitzuverlässigkeiten einzustellen.

Ferner sind Kombinationen dieser beiden Möglichkeiten denkbar, die also für eine bestimmte Wiederholungsnummer im "Quasi-Chase-Mode" und für eine andere im "kombinierten IR und Symbol Mapping-Mode" arbeiten. In allen Fällen können alle Redundanzversionen ohne zusätzliche Signalisierungsaufwand decodiert werden.

Figur 9 zeigt ein Implementierungsbeispiel für die Realisierung durch Variation des Parameters $e_{ini}$ als Funktion der aktuellen Redundanzversion R. Chase Combining lässt sich in diesem Fall ganz einfach dadurch realisieren, dass stets $e_{i\text{-}ni}(0)$ verwendet wird.

Aufgrund des modularen Ansatzes ist dieses Vorgehen sowohl für Punktierung und Repetition, sowie für verschiedenste Transportformate möglich. Durch geeignete Wahl der Parameter (z. B. Anzahl der Redundanzversionen, Anzahl der Bitströme) kann es auf verschiedene Modulations- und Codierungsschemata angepasst werden.

### *Referenzen*

[25.212] "Multiplexing and Channel Coding (FDD) (Release 1999)," Technical Specification 3GPP TS 25.212

### **Patentansprüche**

1. Verfahren zur Datenübertragung gemäß einem ARQ-Verfahren,
   bei dem von einem Sender (1) Daten in Form von Datenpaketen an einen Empfänger (2) übertragen werden,

   a) bei dem von dem Sender (1) nach dem Senden eines Datenpakets bei Vorliegen einer entsprechenden Aufforderung des Empfängers (2) mindestens ein Wiederholungsdatenpaket an den Empfänger (2) übertragen wird,
   b) bei dem die in dem Datenpaket bzw. dem Wiederholungsdatenpaket zu übertragenden Bits einer Bitratenanpassung unterzogen werden ehe sie von dem Sender (1) an den Empfänger (2) übertragen werden, bei dem zu der Bitratenanpassung unterschiedliche Bitratenanpassungsmuster für das Datenpaket und das Wiederholungsdatenpaket verwendet werden, und bei dem die Bitratenanpassung mittels eines Bitratenanpassungsalgorithmus durchgeführt wird, welcher Bits des Datenpakets bzw. Wiederholungsdatenpakets in Abhängigkeit von dem Wert eines entsprechenden Ratenanpassungsparameters ($e_{ini}$) punktiert oder repetiert, wobei der Wert des Ratenanpassungsparameters ($e_{ini}$) zur Bitratenanpassung der, Bits des Wiederholungsdatenpakets gegenüber der Bitratenanpassung der Bits des Datenpakets verändert wird, so dass Bits mit identischem Informationsursprung nach Durchführung der Bitratenanpassung an unterschiedlichen Stellen in dem Datenpaket und in dem Wiederholungsdatenpaket von dem Sender (1) an den Empfänger (2) übertragen werden, wobei der Bitratenanpassungsalgorithmus derart ausgestaltet ist, dass er zu punktierende bzw. zu repetierende Bits unter Verwendung einer Fehlervariable (e) auswählt, wobei die Fehlervariable (e) zu Beginn des Ratenanpassungsalgorithmus mit dem Wert des Ratenanpassungsparameters ($e_{ini}$) initialisiert wird.

2. Verfahren nach Anspruch 1,
   **dadurch gekennzeichnet,**
   **dass** im Schritt (b) zur Bitratenanpassung die Bits eines kanalcodierten Bitstroms auf mehrere Teilbitströme (A-C) aufgeteilt und die einzelnen Teilbitströme (A-C) jeweils einer separaten Bitratenanpassung unterzogen werden, wobei die Bits der einzelnen Teilbitströme (A-C) nach Durchführung der jeweils entsprechenden Bitratenanpassung für das Datenpaket bzw. Wiederholungsdatenpaket wieder miteinander kombiniert werden.

3. Verfahren nach Anspruch 2,
   **dadurch gekennzeichnet,**
   **dass** die Bits der einzelnen Teilbitströme (A-C) nach Durchführung der jeweils entsprechenden Bitratenanpassung für das Datenpaket bzw. Wiederholungsdatenpaket miteinander kombiniert werden.

4. Verfahren nach einem der vorhergehenden Ansprüche,
   **dadurch gekennzeichnet,**
   **dass** die Datenübertragung von dem Sender (1) an den Empfänger (2) in eine Rahmen- und Zeitschlitzstruktur eingebettet erfolgt, wobei das Bitratenanpassungsmuster in Abhängigkeit von der Nummer des Zeitschlitzes und/oder in Abhängigkeit von der Nummer des Rahmens, in dem das Datenpaket bzw. Wiederholungsdatenpaket übertragen wird, verändert wird.

5. Verfahren nach einem der vorhergehenden Ansprüche,
   **dadurch gekennzeichnet,**
   **dass** das für das Wiederholungsdatenpaket verwendete Bitratenanpassungsmuster gegenüber dem für das Datenpaket verwendete Bitratenanpassungsmuster derart verändert wird, dass bei Durchführung einer QAM-Modulation der zu übertragenden Bits die Bits mit dem identischen Informationsgehalt hinsichtlich des Wiederholungsdatenpakets auf andere Punkte in dem QAM-Signalraum abgebildet werden als bei dem ursprüngliche gesendeten Datenpaket.

6. Verfahren nach einem der vorhergehenden Ansprüche,
   **dadurch gekennzeichnet,**
   **dass** die zu übertragenden Bits nach Durchführung der Bitratenanpassung einem Interleavingvorgang und anschließend einer QAM-Modulation unterzogen werden,
   wobei durch den Interleavingvorgang Bits auf mehrere Spalten aufgeteilt und die einzelnen Spalten miteinander vertauscht werden, so dass die Bits durch den Interleavingvorgang zeitlich umgeordnet werden,
   wobei durch die QAM-Modulation jeweils eine bestimmte Anzahl von Bits in der nach dem Interleavingvorgang vorhandenen Bitreihenfolge auf einen Punkt in einem entsprechenden QAM-Signalraum abgebildet werden, wobei die Anzahl der Spalten, welche nach dem Interleavingvorgang und der Vertauschung der Spalten zwischen zwei benachbarten Spalten zu liegen kommen, und die Anzahl der Bits, welche bei der QAM-Modulation auf einen Punkt des QAM-Signalraums abgebildet werden, keinen gemeinsamen Teiler besitzen.

7. Verfahren nach Anspruch 6,
   **dadurch gekennzeichnet,**
   **dass** zur Durchführung des Interleavingvorgangs ein Blockinterleaver verwendet wird.

8. Verfahren nach einem der vorhergehenden Ansprüche,
   **dadurch gekennzeichnet,**
   **dass** bei Anforderung mehrerer Wiederholungsdatenpakete durch den Empfänger (2) zur Bitratenanpassung der Bits der einzelnen Wiederholungsdatenpakete jeweils unterschiedliche Bitratenanpassungsmuster verwendet werden.

9.  Verfahren nach Anspruch 8,
    **dadurch gekennzeichnet,**
    **dass** der Ratenanpassungsparameter ($e_{ini}$) zur Bitratenanpassung der Bits des ursprünglich gesendeten Datenpakets auf den Wert Null, zur Bitratenanpassung der Bits des ersten Wiederholungsdatenpakets auf einen Wert $e_{plus}$ und zur Bitratenanpassung jedes weiteren Wiederholungsdatenpakets auf einen Wert k $e_{minus}$ gesetzt wird, wobei k die Nummer des jeweiligen Wiederholungsdatenpakets, $e_{plus}$ einen ersten Fehlerparameter und $e_{minus}$ einen zweiten Fehlerparameter, welche im Laufe des Ratenanpassungsalgorithmus zur Erneuerung der Fehlervariablen (e) verwendet werden, bezeichnet.

10. Verfahren nach Anspruch 8,
    **dadurch gekennzeichnet,**
    **dass** der Ratenanpassungsparameter ($e_{ini}$) zur Bitratenanpassung der Bits des ursprünglich gesendeten Datenpakets auf den Wert Null, zur Bitratenanpassung der Bits des ersten Wiederholungsdatenpakets auf einen Wert $e_{plus}$ und zur Bitratenanpassung jedes nachfolgenden Wiederholungsdatenpakets mit der Nummer 2k auf einen Wert k $\cdot e_{minus}$ bzw. jedes nachfolgende Wiederholungsdatenpaket mit der Nummer 2k + 1 auf einen Wert k $\cdot e_{minus} + e_{plus}$ mit k = 1, 2, 3 ... gesetzt wird, wobei $e_{plus}$ einen ersten Fehlerparameter und $e_{minus}$ einen zweiten Fehlerparameter, welche im Lauf des Ratenanpassungsalgorithmus zur Erneuerung der Fehlervariablen (e) verwendet werden, bezeichnet.

11. Verfahren nach einem der vorhergehenden Ansprüche,
    **dadurch gekennzeichnet,**
    **dass** sich das für das Datenpaket verwendete Bitratenanpassungsmuster und das für das mindestens eine Wiederholungsdatenpaket verwendete Bitratenanpassungsmuster nur in einem Anfangs- und einem Endabschnitt voneinander unterscheiden, während sie in einem mittleren Abschnitt identisch sind, wobei eine Punktierungs- oder Repetierungsrate der einzelnen Bitratenanpassungsmuster identisch ist.

12. Verfahren nach einem der vorhergehenden Ansprüche,
    **dadurch gekennzeichnet,**
    **dass** das für das Datenpaket verwendete Bitratenanpassungsmuster und das für das mindestens eine Wiederholungsdatenpaket verwendete Bitratenanpassungsmuster von einem Basismuster abgeleitet werden, wobei für das Bitratenanpassungsmuster des Datenpakets und das Bitratenanpassungsmuster des Wiederholungsdatenpakets eine unterschiedliche Anzahl von Punktierungen oder Repetierungen am Anfang und am Ende des Basismusters ausgelassen werden, wobei für das Datenpaket und das Wiederholungsdatenpaket die gesamte Punktierungs- bzw. Repetierungsrate konstant bleibt.

13. Vorrichtung zur Datenübertragung gemäß einem ARQ-Verfahren,
    wobei von der Vorrichtung (1) Daten in Form von Datenpaketen an einen Empfänger (2) übertragen werden,
    wobei die Vorrichtung (1) derart ausgestaltet ist, dass sie nach dem Senden eines Datenpakets bei Vorliegen einer entsprechenden Aufforderung des Empfängers (2) mindestens ein Wiederholungsdatenpaket an den Empfänger (2) überträgt, und
    wobei die Vorrichtung (1) eine Bitratenanpassungseinrichtung (19) zur Anwendung einer Bitratenanpassung auf die in dem Datenpaket bzw. in dem Wiederholungsdatenpaket zu übertragenden Bits aufweist,
    wobei die Vorrichtung (1) mit der Bitratenanpassungseinrichtung (19) derart ausgestaltet ist, dass zur Bitratenanpassung der Bits des Wiederholungsdatenpakets und zur Bitratenanpassung der Bits des Datenpakets unterschiedliche Bitratenanpassungsmuster verwendet werden, und
    dass die Bitratenanpassung mit Hilfe eines Bitratenanpassungsalgorithmus durchgeführt wird, welcher die Bits des Datenpakets bzw. Wiederholungsdatenpakets in Abhängigkeit von dem Wert eines entsprechenden Ratenanpassungsparameters ($e_{ini}$) punktiert oder repetiert, wobei der Wert des Ratenanpassungsparameters ($e_{ini}$) zur Bitratenanpassung der Bits des Wiederholungsdatenpakets gegenüber der Bitratenanpassung der Bits des Datenpakets verändert wird, so dass Bits mit dem identischen Informationsursprung nach Durchführung der Bitratenanpassung an unterschiedlichen Stellen in dem Datenpaket und in dem Wiederholungsdatenpaket von der Vorrichtung (1) an den Empfänger (2) übertragen werden,
    wobei der Bitratenanpassungsalgorithmus derart ausgestaltet ist, dass er zu punktierende bzw. zu repetierende Bits unter Verwendung einer Fehlervariable (e) auswählt, wobei die Fehlervariable (e) zu Beginn des Ratenanpassungsalgorithmus mit dem Wert des Ratenanpassungsparameters ($e_{ini}$) initialisiert wird.

**14.** Vorrichtung nach Anspruch 13,
**dadurch gekennzeichnet,**
**dass** die Bitratenanpassungseinrichtung (19) eine Bitseparationseinrichtung (20) zur Aufteilung der Bits eines kanalcodierten Bitstroms auf mehrere Teilbitströme (A-C), den einzelnen Teilbitströmen (A-C) zugeordnete separate Bitratenanpassungsmittel (21-23), um die einzelnen Teilbitströme (A-C) jeweils einer separaten Bitratenanpassung zu unterziehen, und eine Bitsammeleinrichtung (24) zum Kombinieren der von den einzelnen Bitratenanpassungsmitteln (21-23) ausgegebenen Bits der einzelnen Teilbitströme (A-C) miteinander umfasst.

**15.** Vorrichtung nach Anspruch 13 oder 14,
**dadurch gekennzeichnet,**
**dass** die Vorrichtung (1) zur Durchführung des Verfahrens nach einem der Ansprüche 1-12 ausgestaltet ist.

**16.** Empfänger (2) zum Empfang von in Form von Datenpaketen gemäß einem ARQ-Verfahren übertragenen Daten,
**dadurch gekennzeichnet,**
**dass** der Empfänger (2) zum Empfang und zur Auswertung von einem gemäß dem Verfahren nach einem der Ansprüche 1-12 übertragenen Datenpaket bzw. Wiederholungsdatenpaket ausgestaltet ist, um den Informationsgehalt des Datenpakets durch gemeinsame Auswertung der in dem Datenpaket und in dem Wiederholungsdatenpaket empfangenen Bits zu bestimmen.

**Claims**

**1.** Method for transferring data according to an ARQ method
where data is transferred in the form of data packets from a sender (1) to a receiver (2)

a) where after transmission of a data packet and in the event of an appropriate request from the receiver (2), at least one retransmission data packet is transferred to the receiver (2) from the sender (1)
b) where bits to be transferred in the data packet or retransmission data packet are subjected to bit rate adaptation before being transferred from the sender (1) to the receiver (2),

where different bit rate adaptation patterns are used for the data packet and the retransmission data packet, and where the bit rate adaptation is carried out with the aid of a bit rate adaptation algorithm, which punctures or repeats the bits in the data packet or retransmission data packet depending on the value of an appropriate rate adaptation pattern parameter ($e_{ini}$); the value of the rate adaptation pattern parameter ($e_{ini}$) for bit rate adaptation of the bits in the retransmission data packet is changed with respect to the bit rate adaptation of the data packet so that after bit rate adaptation, bits with the same information origin are transferred from the sender (1) to the receiver (2) in different positions in the data packet and in the retransmission data packet; the bit rate adaptation algorithm is designed so that it selects bits to be punctured or repeated using an error variable (e), where the error variable (e) is initialised at the start of the rate adaptation algorithm with the value of the rate adaptation algorithm parameter ($e_{ini}$).

**2.** Method according to Claim 1
**characterised in that**
in stage (b) for bit rate adaptation the bits of a channel-coded bit flow are divided into a plurality of partial bit flows (A-C) and the individual partial bit flows (A-C) are each subjected to separate bit rate adaptation; after the appropriate bit rate adaptation for the data packet or the retransmission data packet, the bits of the individual partial bit flows (A-C) are re-combined.

**3.** Method according to Claim 2
**characterised in that**
after the appropriate bit rate adaptation, the bits of the individual partial bit flows (A-C) are combined proportionally per data packet or retransmission data packet.

**4.** Method according to one of the preceding claims
**characterised in that**
the data transfer from the sender (1) to the receiver (2) is integrated in a frame and time slot structure, where the bit rate adaptation pattern is changed depending on the number of the time slot and/or depending on the number of the frame in which the data packet or retransmission data packet is transferred.

**5.** Method according to one of the preceding claims
**characterised in that**
the bit rate adaptation pattern used for the retransmission data packet is changed compared with the bit rate adaptation pattern used for the data packet in such a way that when QAM modulation is performed on the bits to be transferred, the bits with identical information content with regard to the retransmission data packet are mapped to different points in the QAM symbol field than those in the data packet originally sent.

**6.** Method according to one of the preceding claims
**characterised in that**
after the bit rate adaptation, the bits to be transferred are subjected to an interleaving process and then QAM modulation;
in the interleaving process, bits are distributed to a plurality of columns and those individual columns are replaced by others so that the bits are temporally reordered by the interleaving process,
in QAM modulation, a certain number of bits in the bit sequence after the interleaving process are mapped to a point in an appropriate QAM signal field, where the number of columns that come to lie between two neighbouring columns after the interleaving process and column replacement and the number of bits which are mapped by QAM modulation to a point in the QAM symbol field do not have a common divider.

**7.** Method according to Claim 6
**characterised in that**
a block interleaver is used for the interleaving process.

**8.** Method according to one of the preceding claims
**characterised in that**
with a request for a plurality of retransmission data packets from the receiver (2), different bit rate adaptation patterns are used each time to adapt the bit rate of the bits of the individual retransmission data packets.

**9.** Method according to Claim 8,
**characterised in that**
the rate adaptation parameter ($e_{ini}$) is set to zero for bit rate adaptation of the data packet originally sent, is set to the value $e_{plus}$ for bit rate adaptation of the first retransmission data packet and to the value k $e_{minus}$, for bit rate adaptation for each additional retransmission data packet, where $k$ represents the number of the retransmission data packet, $e_{plus}$ is a first error parameter and $e_{minus}$ is a second error parameter which are used in the rate adaptation algorithm to update the error variables (e).

**10.** Method according to Claim 8,
**characterised in that**
the rate adaptation parameter ($e_{ini}$) is set to zero for bit rate adaptation of the data packet originally sent, is set to the value $e_{plus}$ for bit rate adaptation of the first retransmission data packet and for bit rate adaptation of each subsequent retransmission data packet with the number 2k to a value k - $e_{minus}$ or each subsequent retransmission data packet with the number 2k + 1 to a value k - $e_{minus}$ + $e_{plus}$ with k = 1, 2, 3 ..., where $e_{plus}$ represents a first error parameter and $e_{minus}$ a second error parameter which are used in the rate adaptation algorithm to update the error variables (e).

**11.** Method according to one of the preceding claims
**characterised in that**
the bit rate adaptation pattern used for the data packet and the bit rate adaptation pattern used for at least one retransmission data packet only differ essentially in the start section and end section, whereas in the middle section they are essentially identical, where the puncturing rate or repetition rate of the individual bit rate adaptation pattern is identical.

**12.** Method according to one of the preceding claims
**characterised in that**
the bit rate adaptation pattern used for the data packet and the bit rate adaptation pattern used for at least one retransmission data packet is derived from a basic pattern, where a different number of puncturing and repetitions are omitted at the start and at the end of the basic pattern for the bit rate adaptation pattern of the data packet and the bit rate adaptation pattern of the retransmission data packet; the total number of puncturings and repetitions remains constant for the data packet and retransmission data packet.

**13.** Device for transferring data according to an ARQ method
where data is transferred as data packets from a device (1) to a receiver (2),
where the device (1) is designed such that after sending a data packet and in the event of an appropriate request from the receiver (2), at least one retransmission data packet is transferred to the receiver (2), and
where the device (1) has a bit rate adaptation device (19) to apply a bit rate adaptation to the bits to be transferred in the data packet or retransmission data packet;
the device (1) with the bit rate adaptation device (19) is designed such that different bit rate adaptation patterns are used for bit rate adaptation of the bits of the retransmission data packet
and the bit rate adaptation is carried out with the aid of a bit rate adaptation algorithm, which punctures or repeats the bits in the data packet or retransmission data packet depending on the value of an appropriate rate adaptation pattern parameter ($e_{ini}$); the value of the rate adaptation pattern parameter ($e_{ini}$) for bit rate adaptation of the bits in the retransmission data packet is changed with respect to the bit rate adaptation of the data packet with the result that after bit rate adaptation bits with the same information origin are transferred from the device (1) to the receiver (2) in different positions in the data packet and in the retransmission data packet; the bit rate adaptation algorithm is designed so that it selects bits to be punctured or repeated using an error variable (e), where the error variable (e) is initialised at the start of the rate adaptation algorithm with the value of the rate adaptation algorithm parameter ($e_{ini}$) .

**14.** Device according to Claim 13
**characterised in that**
the bit rate adaptation device (19) comprises a bit separation device (20) to divide the bits of a channel-coded bit flow into a plurality of partial bit flows (A-C), separate bit rate adaptation facilities (21-23) assigned to the individual partial bit flows (A-C) to subject the individual partial bit flows (A-C) to separate bit rate adaptation, and a bit collection device (24) to combine the bits of the individual partial bit flows (A-C) output from the individual bit rate adaptation facilities (21-23).

**15.** Device according to Claim 13 or 14,
**characterised in that**
the device (1) is designed to carryout the method according to one of the Claims 1-12.

**16.** Receiver (2) to receive data transferred as data packets according to an ARQ method,
**characterised in that**
the receiver (2) is designed to receive and evaluate a data packet or retransmission data packet transferred according to a method according to one of the Claims 1-12 to determine the information content of the data packet through common evaluation of the bits received in the data packet and the retransmission data packet.

**Revendications**

**1.** Procédé de transmission de données selon un procédé ARQ,
dans lequel des données sont transmises par un émetteur (1) à un récepteur (2) sous forme de paquets de données,

a) dans lequel, lorsqu'une demande correspondante du récepteur (2) est présente, au moins un paquet de données de répétition est transmis par l'émetteur (1) au récepteur (2), après l'émission d'un paquet de données,
b) dans lequel les bits à transmettre dans le paquet de données resp. dans le paquet de données de répétition sont soumis à une adaptation du débit binaire avant d'être transmis au récepteur (2) par l'émetteur (1),

dans lequel, pour l'adaptation du débit binaire, différents modèles d'adaptation du débit binaire sont utilisés pour le paquet de données et le paquet de données de répétition, et
dans lequel l'adaptation du débit binaire est exécutée au moyen d'un algorithme d'adaptation du débit binaire, lequel ponctue ou répète des bits du paquet de données resp. du paquet de données de répétition en fonction de la valeur d'un paramètre ($e_{ini}$) d'adaptation du débit binaire, la valeur du paramètre ($e_{ini}$) d'adaptation du débit binaire étant modifiée pour l'adaptation du débit binaire des bits du paquet de données de répétition par rapport à l'adaptation du débit binaire des bits du paquet de données, de sorte que les bits ayant la même origine d'information après l'exécution de l'adaptation du débit binaire sont transmis au récepteur (2) par l'émetteur (1), à différents endroits dans le paquet de données et dans le paquet de données de répétition, l'algorithme d'adaptation du débit binaire étant conçu de manière à ce qu'il sélectionne des bits à ponctuer resp. des bits à répéter en utilisant une variable d'erreur (e), la variable d'erreur (e), au début de l'algorithme d'adaptation du débit binaire, étant initialisée avec la

valeur du paramètre (e$_{ini}$) d'adaptation du débit binaire.

2. Procédé selon la revendication 1,
   **caractérisé en ce**
   **qu'**à l'étape (b) destinée à l'adaptation du débit binaire, les bits d'un flux de bits codé canal sont répartis sur plusieurs flux de bits partiels (A - C) et en ce que chacun des flux de bits partiels (A - C) est respectivement soumis à une adaptation du débit binaire séparée, les bits de chacun des flux de bits partiels (A - C) étant de nouveau combinés entre eux après l'exécution de l'adaptation du débit binaire respectivement correspondante pour le paquet de données resp. le paquet de données de répétition.

3. Procédé selon la revendication 2,
   **caractérisé en ce**
   **que** les bits de chacun des flux de bits partiels (A - C) sont combinés entre eux après l'exécution de l'adaptation du débit binaire respectivement correspondante pour le paquet de données resp. le paquet de données de répétition.

4. Procédé selon l'une quelconque des revendications précédentes,
   **caractérisé en ce**
   **que** la transmission des données au récepteur (2) par l'émetteur (1) est réalisée en étant insérée dans une structure de trames et de créneaux temporels, le modèle d'adaptation du débit binaire étant modifié en fonction du numéro du créneau temporel et/ou en fonction du numéro de la trame dans laquelle le paquet de données resp. le paquet de données de répétition est transmis.

5. Procédé selon l'une quelconque des revendications précédentes,
   **caractérisé en ce**
   **que** le modèle d'adaptation du débit binaire utilisé pour le paquet de données de répétition est modifié par rapport au modèle d'adaptation du débit binaire utilisé pour le paquet de données, de manière à ce que lors de l'exécution d'une modulation QAM des bits à transmettre, les bits ayant le même contenu informatif au regard du paquet de données de répétition sont représentés sur d'autres points dans l'espace de signal QAM que dans le paquet de données émis initialement.

6. Procédé selon l'une quelconque des revendications précédentes,
   **caractérisé en ce**
   **que** les bits à transmettre, après l'exécution de l'adaptation du débit binaire, sont soumis à une opération d'entrelacement et ensuite à une modulation QAM,
   des bits étant répartis sur plusieurs colonnes en raison de l'opération d'entrelacement et chacune des colonnes étant permutées entre elles, de sorte que les bits sont reclassés temporellement en raison de l'opération d'entrelacement,
   un nombre déterminé de bits étant représenté, dans l'ordre de bits présent après l'opération d'entrelacement, sur un point dans un espace de signal QAM correspondant, le nombre de colonnes, qui viennent se situer entre deux colonnes adjacentes après l'opération d'entrelacement et la permutation des colonnes, et le nombre de bits, qui sont représentés sur un point de l'espace de signal QAM lors de la modulation QAM, ne possédant aucun diviseur commun.

7. Procédé selon la revendication 6,
   **caractérisé en ce**
   **qu'**un entrelacement en bloc est utilisé pour l'exécution de l'opération d'entrelacement.

8. Procédé selon l'une quelconque des revendications précédentes,
   **caractérisé en ce**
   **que** lors de la demande de plusieurs paquets de données de répétition par le récepteur (2) pour l'adaptation du débit binaire des bits de chacun des paquets de données de répétition, des modèles d'adaptation de débit binaire différents sont utilisés.

9. Procédé selon la revendication 8,
   **caractérisé en ce**
   **que** le paramètre (e$_{ini}$) d'adaptation du débit binaire destiné à l'adaptation du débit binaire des bits du paquet de données émis initialement est mis sur la valeur zéro, en ce qu'il est mis sur une valeur replus pour l'adaptation du débit binaire des bits du premier paquet de données de répétition et en ce qu'il est mis sur une valeur k minus pour inadaptation du débit binaire de chaque autre paquet de données de répétition, k désignant le numéro du paquet de données de répétition respectif, $e_{plus}$ désignant un premier paramètre d'erreur et $e_{minus}$ désignant un second paramètre d'erreur, lesquels sont utilisés au cours de l'algorithme d'adaptation du débit binaire pour remplacer les variables d'erreur (e).

**10.** Procédé selon la revendication 8,
**caractérisé en ce**
**que** le paramètre ($e_{ini}$) d'adaptation du débit binaire destiné à l'adaptation du débit binaire des bits du paquet de données émis initialement est mis sur la valeur zéro, en ce qu'il est mis sur une valeur $e_{plus}$ pour l'adaptation du débit binaire des bits du premier paquet de données de répétition et en ce qu'il est mis sur une valeur k $e_{minus}$ pour l'adaptation du débit binaire de chaque paquet suivant de données de répétition ayant le numéro 2k resp. en ce qu'il est mis sur une valeur k $e_{minus}$ + $e_{plus}$, avec k = 1, 2, 3 ... pour l'adaptation du débit binaire de chaque paquet suivant de données de répétition ayant le numéro 2k + 1, $e_{plus}$ désignant un premier paramètre d'erreur et $e_{minus}$ désignant un second paramètre d'erreur, lesquels sont utilisés au cours de l'algorithme d'adaptation du débit binaire pour remplacer les variables d'erreur (e).

**11.** Procédé selon l'une quelconque des revendications précédentes,
**caractérisé en ce**
**que** le modèle d'adaptation du débit binaire utilisé pour le paquet de données et le modèle d'adaptation du débit binaire utilisé pour l'au moins un paquet de données de répétition se différencient l'un de l'autre seulement dans une section initiale et dans une section terminale, alors qu'ils sont identiques dans une section centrale, un taux de ponction ou un taux de répétition de chacun des modèles d'adaptation du débit binaire étant identique.

**12.** Procédé selon l'une quelconque des revendications précédentes,
**caractérisé en ce**
**que** le modèle d'adaptation du débit binaire utilisé pour le paquet de données et le modèle d'adaptation du débit binaire utilisé pour l'au moins un paquet de données de répétition sont dérivés d'un modèle de base, un nombre différent de ponctions ou de répétitions étant omis au début et à la fin du modèle de base pour le modèle d'adaptation du débit binaire du paquet de données et pour le modèle d'adaptation du débit binaire du paquet de données de répétition, le taux de ponction resp. le taux de répétition total restant constant pour le paquet de données et pour le paquet de données de répétition.

**13.** Dispositif de transmission de données selon un procédé ARQ,
des données étant transmises par le dispositif (1) à un récepteur (2) sous forme de paquets de données,
le dispositif (1) étant conçu de manière à ce qu'après l'émission d'un paquet de données, lorsqu'une demande correspondante du récepteur (2) est présente, il transmette au moins un paquet de données de répétition au récepteur (2), et
le dispositif (1) présentant un dispositif d'adaptation du débit binaire (19) pour l'utilisation d'une adaptation du débit binaire aux bits à transmettre dans le paquet de données resp. dans le paquet de données de répétition,
le dispositif (1) comprenant le dispositif d'adaptation du débit binaire (19) étant conçu de manière à ce que différents modèles d'adaptation du débit binaire soient utilisés pour l'adaptation du débit binaire des bits du paquet de données de répétition et pour l'adaptation du débit binaire des bits du paquet de données, et
à ce que l'adaptation du débit binaire soit exécutée à l'aide d'un algorithme d'adaptation du débit binaire, lequel ponctue ou répète les bits du paquet de données resp. du paquet de données de répétition en fonction de la valeur d'un paramètre ($e_{ini}$) correspondant d'adaptation du débit binaire, la valeur du paramètre ($e_{ini}$) d'adaptation du débit binaire étant modifiée pour l'adaptation du débit binaire des bits du paquet de données de répétition par rapport à l'adaptation du débit binaire des bits du paquet de données, de sorte que les bits ayant la même origine d'information sont transmis par l'émetteur (1) au récepteur (2), à différents endroits dans le paquet de données et dans le paquet de données de répétition, après l'exécution de l'adaptation du débit binaire, l'algorithme d'adaptation du débit binaire étant conçu de manière à ce qu'il sélectionne des bits à ponctuer resp. des bits à répéter en utilisant une variable d'erreur (e), la variable d'erreur (e), au début de l'algorithme d'adaptation du débit binaire, étant initialisée avec la valeur du paramètre ($e_{ini}$) d'adaptation du débit binaire.

**14.** Dispositif selon la revendication 13,
**caractérisé en ce**
**que** le dispositif d'adaptation du débit binaire (19) comprend un dispositif de séparation de bits (20) pour la répartition des bits d'un flux de bits codé canal sur plusieurs flux de bits partiels (A - C), des moyens séparés d'adaptation du débit binaire (21 - 23) affectés à chacun des flux de bits partiels (A - C), afin de soumettre chacun des flux de bits partiels (A - C) respectivement à une adaptation de débit binaire séparée, et un dispositif collecteur de bits (24) destiné à combiner entre eux les bits, sortis par chacun des moyens d'adaptation du débit binaire (21 -23), de chacun des flux de bits partiels (A - C).

15. Dispositif selon la revendication 13 ou 14,
**caractérisé en ce**
**que** le dispositif (1) destiné à l'exécution du procédé est conçu selon l'une quelconque des revendications 1 à 12.

16. Récepteur (2) destiné à la réception de données transmises sous forme de paquets de données selon un procédé ARQ,
**caractérisé en ce**
**que** le récepteur (2) est conçu pour la réception et l'évaluation d'un paquet de données resp. d'un paquet de données de répétition transmis selon le procédé selon l'une quelconque des revendications 1 à 12, afin de déterminer le contenu informatif du paquet de données par une évaluation commune des bits reçus dans le paquet de données et dans le paquet de données de répétition.

## FIG 1

# FIG 2

# FIG 3

$e = e_{ini}$

$m = 1$

$e_{plus} = e_{plus}$

do while $m <= X_i$

    $e = e - e_{minus}$

    if $e > 0$ then

        set bit $x_{i,m}$ to $\delta$ where $\delta \notin \{0,1\}$

    else

        do

            select bit $x_{i,m}$

            $e = e + e_{plus}$

        while $e <= 0$

    end if

    $m = m + 1$

end do

FIG 4
(STAND DER TECHNIK)

FIG 5

Ratenanpassung

# FIG 6

Blockanfang:

R=0 |S|P|S|P|S|P|S|P|S|P|S|P|S|P|S|P|S|P|S|P|S|P|S|P|

R=1 |S|P|S|P|S|P|S|P|S|P|S|P|S|P|S|P|S|P|S|P|S|P|S|P|

R=2 |S|P|S|P|S|P|S|P|S|P|S|P|S|P|S|P|S|P|S|P|S|P|S|P|

Blockende:

R=0 |P|S|P|S|P|S|P|S|P|S|P|S|P|S|P|S|P|S|P|S|P|S|P|S|P|

R=1 |P|S|P|S|P|S|P|S|P|S|P|S|P|S|P|S|P|S|P|S|P|S|P|S|P|

R=2 |P|S|P|S|P|S|P|S|P|S|P|S|P|S|P|S|P|S|P|S|P|S|P|S|P|

| X | Hohe Zuverlässigkeit  | X | Punktiertes Bit  P: Bit des parity Bitstroms 1

| X | Niedrige Zuverlässigkeit  S: systematisches Bit  P: Bit des parity Bitstroms 2

EP 1 397 881 B1

# FIG 7

Blockanfang:

R=0  S P S P S P S P S P S P S P S P S P S P S P S P S P S P S P

R=1  S P S P S P S P S P S P S P S P S P S P S P S P S P S P S P

R=2  S P S P S P S P S P S P S P S P S P S P S P S P S P S P S P

Blockende:

R=0  P S P S P S P S P S P S P S P S P S P S P S P S P S P S P

R=1  P S P S P S P S P S P S P S P S P S P S P S P S P S P S P

R=2  P S P S P S P S P S P S P S P S P S P S P S P S P S P S P

| X | Hohe Zuverlässigkeit | X | Punktiertes Bit | P: Bit des parity Bitstroms 1 |
| X | Niedrige Zuverlässigkeit | | S: systematisches Bit | $\underline{P}$: Bit des parity Bitstroms 2 |

## FIG 8

Ratenanpassung

DCH

HS-DSCH

Ratenanpassungsalgorithmus

HSDPA
Erweiterung

$X_b$, $e_{ini}$, $e_{plus}$, $e_{minus}$

$R$, $n_{offset}$

## FIG 9

Ratenanpassung

DCH

HS-DSCH

Ratenanpassungsalgorithmus

HSDPA
Erweiterung

$X_b$, $e_{ini} = f(R)$, $e_{plus}$, $e_{minus}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0771092 A1

**In der Beschreibung aufgeführte Nicht-Patentliteratur**

- Physical Layer Design for Packet Data over IS-136. *Vehicular Technology Conference, 1997, IEEE 47th Phoenix,* 04. Mai 1997, 1029-1033